# EUROPEAN PATENT APPLICATION

(11) **EP 4 804 697 A1**
(43) Date of publication of application: **09.09.2026**
(21) Application number: 24896260.7
(22) Date of filing: 12.11.2024
(51) Int. Cl.: H04W 72/542

(54) **COMMUNICATION METHOD AND APPARATUS**

(30) Priority: 30.11.2023 CN 202311637484
(71) Applicant: Huawei Technologies Co., Ltd., Shenzhen, Guangdong 518129 (CN)
(72) Inventor: LI, Guanglei, Shenzhen, Guangdong 518129 (CN); JIA, Jianxin, Shenzhen, Guangdong 518129 (CN); ZONG, Zaifeng, Shenzhen, Guangdong 518129 (CN)
(74) Representative: Isarpatent
(86) International application number: PCT/CN2024/131525
(87) International publication number: WO 2025/113169

(57) **Abstract**

A communication method and apparatus are provided. In the method, a sensing function network element receives first information from a service requester, where the first information includes an identifier list and a sensing area, and the identifier list includes an identifier of one or more terminal devices; the sensing function network element receives sensing data for the sensing area from a sensing device, where the sensing data includes location information of one or more objects; the sensing function network element determines an association relationship between the one or more terminal devices and the one or more objects based on location information of the one or more terminal devices and the location information of the one or more objects; and the sensing function network element indicates, to the service requester by using second information, the association relationship between the one or more terminal devices and the one or more objects. This manner helps the service requester determine a terminal device cooperating with the service requester and/or a terminal device not cooperating with the service requester in the one or more terminal devices.

## Description

This application claims priority to Chinese Patent Application No. 202311637484.6, filed with the China National Intellectual Property Administration on November 30, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a mobile communication system, a network device may use a higher radio frequency band, for example, a millimeter wave or even terahertz, to perform sensing and identification on specific areas/objects/events.

A sensing area may include terminal devices cooperating with a service requester (for example, terminal devices authorized by a supervision platform or registered with the supervision platform) and terminal devices not cooperating with the service requester (for example, terminal devices that are not authorized by the supervision platform or are not registered with the supervision platform). It is an important requirement of the service requester to distinguish between the terminal devices cooperating with the service requester and the terminal devices not cooperating with the service requester.

Therefore, how the service requester distinguishes between the terminal devices cooperating with the service requester and the terminal devices not cooperating with the service requester is a problem to be resolved.

### SUMMARY

Embodiments of this application provide a communication method and apparatus, so that a service requester can distinguish between a cooperative terminal device and/or a non-cooperative terminal device.

According to a first aspect, an embodiment of this application provides a communication method. The method may be performed by a sensing function network element. The sensing function network element herein may refer to the sensing function network element, or may refer to a processor, a module, a chip, a chip system, or the like that implements the method in the sensing function network element. In the method, the sensing function network element receives first information from a service requester, where the first information includes an identifier list and a sensing area, and the identifier list includes an identifier of one or more terminal devices. The sensing function network element receives sensing data for the sensing area from a sensing device, where the sensing data includes location information of one or more objects. The sensing function network element determines an association relationship between the one or more terminal devices and the one or more objects based on location information of the one or more terminal devices and the location information of the one or more objects. The sensing function network element sends second information to the service requester, where the second information indicates the association relationship between the one or more terminal devices and the one or more objects.

In this embodiment of this application, the sensing function network element determines the association relationship between the one or more terminal devices and the one or more objects based on the location information of the one or more terminal devices and the location information that is of the one or more objects and that is obtained by the sensing device for the sensing area, and indicates, to the service requester by using the second information, the association relationship between the one or more terminal devices and the one or more objects. This manner helps the service requester determine, based on the association relationship between the one or more terminal devices and the one or more objects, a terminal device cooperating with the service requester and/or a terminal device not cooperating with the service requester.

In an optional implementation, the identifier list includes an identifier of one terminal device. In this case, that the sensing function network element determines an association relationship between the one or more terminal devices and the one or more objects based on location information of the one or more terminal devices and the location information of the one or more objects includes: determining, based on location information of one terminal device and the location information of the one or more objects, whether the one terminal device is associated with the one or more objects. Therefore, the second information specifically indicates whether the one terminal device is associated with an object in the one or more objects. This helps the service requester determine, based on whether the one terminal device is associated with the object in the one or more objects, whether the one terminal device is the terminal device cooperating with the service requester.

In another optional implementation, the identifier list includes identifiers of a plurality of terminal devices. In this case, that the sensing function network element determines an association relationship between the one or more terminal devices and the one or more objects based on location information of the one or more terminal devices and the location information of the one or more objects includes: determining, based on location information of the plurality of terminal devices and the location information of the one or more objects, a terminal device associated with an object in the one or more objects and/or a terminal device not associated with an object in the one or more objects in the plurality of terminal devices. Therefore, the second information specifically indicates an identifier of the associated terminal device and/or an identifier of the non-associated terminal device in the plurality of terminal devices. This helps the service requester determine, based on the terminal device associated with the object and/or the terminal device not associated with the object in the plurality of terminal devices, the terminal device cooperating with the service requester and/or the terminal device not cooperating with the service requester.

In an optional implementation, the second information includes an association indication and an identifier of a terminal device corresponding to the association indication, and/or a non-association indication and an identifier of a terminal device corresponding to the non-association indication. The association indication indicates that the terminal device corresponding to the association indication is associated with the object, and the non-association indication indicates that the terminal device corresponding to the non-association indication is not associated with the object.

In an optional implementation, before determining an association relationship between the one or more terminal devices and the one or more objects based on location information of the one or more terminal devices and the location information of the one or more objects, the sensing function network element further obtains the location information of the one or more terminal devices based on a location service.

In another optional implementation, before determining an association relationship between the one or more terminal devices and the one or more objects based on location information of the one or more terminal devices and the location information of the one or more objects, the sensing function network element further obtains the location information of the one or more terminal devices from the service requester.

It can be learned that the sensing function network element can obtain the location information of the one or more terminal devices based on the location service, or obtain the location information of the one or more terminal devices from the service requester.

In an optional implementation, when obtaining the location information of the one or more terminal devices from the service requester, the sensing function network element may further obtain, from the service requester, a first timestamp associated with the location information of the one or more terminal devices. That the first timestamp is associated with the location information of the one or more terminal devices may be understood as: The location information of the one or more terminal devices is obtained by the service requester at a moment indicated by the first timestamp or within a time range indicated by the first timestamp.

In addition, if the sensing function network element obtains the first timestamp from the service requester, that the sensing function network element determines an association relationship between the one or more terminal devices and the one or more objects based on location information of the one or more terminal devices and the location information of the one or more objects includes: determining the association relationship between the one or more terminal devices and the one or more objects based on the location information of the one or more terminal devices and location information of the one or more objects at the moment indicated by the first timestamp or within the time range indicated by the first timestamp.

It can be learned that the sensing function network element determines the association relationship between the one or more terminal devices and the one or more objects based on location information of the one or more terminal devices and location information of the one or more objects that are obtained at a same moment or within a same time range. In this manner, accuracy of the association relationship between the one or more terminal devices and the one or more objects can be improved.

In another optional implementation, the sensing function network element further obtains, from the service requester, a second timestamp associated with the identifier list, where the second timestamp indicates a moment at which the one or more terminal devices exist in the sensing area. Therefore, that the sensing function network element determines an association relationship between the one or more terminal devices and the one or more objects based on location information of the one or more terminal devices and the location information of the one or more objects includes: determining the association relationship between the one or more terminal devices and the one or more objects based on the location information of the one or more terminal devices and location information of the one or more objects at the moment indicated by the second timestamp or within a time range indicated by the second timestamp. In this manner, the accuracy of the association relationship between the one or more terminal devices and the one or more objects can also be improved.

In an optional implementation, the sensing function network element further obtains an association operation indication from the service requester, where the association operation indication indicates to determine the association relationship between the one or more terminal devices and the one or more objects in the sensing data obtained by the sensing function network element. Therefore, the sensing function network element determines the association relationship between the one or more terminal devices and the one or more objects based on the association operation indication.

In an optional implementation, the second information further indicates a moment corresponding to the association relationship between the one or more terminal devices and the one or more objects. In this manner, the service requester may learn of the moment at which the association relationship between the one or more terminal devices and the one or more objects exists.

In an optional implementation, the second information further includes feature information of a terminal device associated with an object and/or feature information of a terminal device not associated with an object in the one or more terminal devices. This manner helps the service requester re-determine, based on the second information and feature information that is of the one or more terminal devices and that is configured in the service requester, whether each of the one or more terminal devices is associated with the object.

In an optional implementation, the second information further includes feature information of an object associated with the one or more terminal devices and/or feature information of an object associated with none of the one or more terminal devices in the one or more objects. This manner helps the service requester identify a type of each of the one or more objects in the sensing area based on the second information.

In an optional implementation, the feature information indicates at least one of the following: a contour, a type, a trajectory, an orientation, or a velocity.

In an optional implementation, that the sensing function network element determines, based on the location information of the one terminal device and the location information of the one or more objects, whether the one terminal device is associated with the object includes: when the location information of the one terminal device is the same as one of the location information of the one or more objects, determining that the one terminal device is associated with an object; and when the location information of the one terminal device is different from all of the location information of the one or more objects, determining that the one terminal device is not associated with an object. Being the same may be understood as being completely the same, or may be understood as being the same within a preset range.

In an optional implementation, that the sensing function network element determines, based on the location information of the plurality of terminal devices and the location information of the one or more objects, the terminal device associated with the object and/or the terminal device not associated with the object in the plurality of terminal devices includes: determining, as a terminal device associated with an object, a terminal device corresponding to location information that is in the location information of the plurality of terminal devices and that is the same as the location information of the one or more objects; and/or determining, as a terminal device not associated with an object, a terminal device corresponding to location information that is in the location information of the plurality of terminal devices and that is different from all of the location information of the one or more objects.

In an optional implementation, the first information is carried in a sensing request, and the sensing request is used for requesting the sensing function network element to perform sensing in the sensing area. This manner helps reduce signaling overheads.

According to a second aspect, an embodiment of this application provides a communication method. The method may be performed by a service requester. The service requester herein may refer to the service requester, or may refer to a processor, a module, a chip, a chip system, or the like that implements the method in the service requester. In the method, the service requester sends first information to a first sensing function network element, where the first information includes a first identifier list and a sensing area, and the first identifier list includes an identifier of one or more terminal devices. The service requester receives second information from the first sensing function network element, where the second information indicates an association relationship between the one or more terminal devices and one or more objects in the sensing area.

In this embodiment of this application, the service requester obtains the association relationship that is between the one or more terminal devices and the one or more objects in the sensing area and that is indicated to the first sensing function network element. This helps the service requester determine, based on the association relationship between the one or more terminal devices and the one or more objects, a terminal device cooperating with the service requester and/or a terminal device not cooperating with the service requester.

In an optional implementation, the first information is used for triggering the first sensing function network element to determine the association relationship between the one or more terminal devices and the one or more objects based on location information of the one or more terminal devices and location information of the one or more objects in sensing data obtained by the first sensing function network element. This manner helps the first sensing function network element determine the association relationship between the one or more terminal devices and the one or more objects based on the first information.

In an optional implementation, the first identifier list includes an identifier of one terminal device. In this case, the second information specifically indicates whether the one terminal device is associated with an object in the one or more objects.

In another optional implementation, the first identifier list includes identifiers of a plurality of terminal devices. In this case, the second information specifically indicates an identifier of a terminal device associated with an object in the one or more objects and/or an identifier of a terminal device not associated with an object in the one or more objects in the plurality of terminal devices.

In an optional implementation, the second information includes an association indication and an identifier of a terminal device corresponding to the association indication, and/or a non-association indication and an identifier of a terminal device corresponding to the non-association indication. The association indication indicates that the terminal device corresponding to the association indication is associated with the object, and the non-association indication indicates that the terminal device corresponding to the non-association indication is not associated with the object.

In an optional implementation, the service requester further determines, based on the second information, the terminal device cooperating with the service requester and/or the terminal device not cooperating with the service requester in the sensing area. This manner helps the service requester track or counteract the terminal device not cooperating with the service requester.

In an optional implementation, the service requester further sends the location information of the one or more terminal devices to the first sensing function network element, so that the first sensing function network element obtains the location information of the one or more terminal devices.

In an optional implementation, before sending the location information of the one or more terminal devices to the first sensing function network element, the service requester further obtains the location information of the one or more terminal devices based on a location service.

In another optional implementation, before sending the location information of the one or more terminal devices to the first sensing function network element, the service requester further obtains location information from each of the one or more terminal devices.

It can be learned that, that the service requester obtains the location information of the one or more terminal devices includes: obtaining the location information of the one or more terminal devices based on the location service, or receiving the location information reported by each of the one or more terminal devices.

In an optional implementation, the service requester further sends a first timestamp associated with the location information of the one or more terminal devices to the first sensing function network element. That the first timestamp is associated with the location information of the one or more terminal devices may be understood as: The location information of the one or more terminal devices is obtained by the service requester at a moment indicated by the first timestamp or within a time range indicated by the first timestamp.

If the location information of the one or more terminal devices is obtained by the service requester based on the location service, the first timestamp is the moment or time range of obtaining the location information by the service requester. If the location information of the one or more terminal devices is reported by each of the one or more terminal devices to the service requester, the first timestamp may be reported together with the location information by each terminal device to the service requester, or may be a moment at which the service requester receives the location information of the one or more terminal devices or a time range within which the service requester receives the location information of the one or more terminal devices.

In an optional implementation, the service requester further sends a second timestamp associated with the first identifier list to the first sensing function network element, where the second timestamp indicates a moment at which the one or more terminal devices in the first identifier list exist in the sensing area. This manner helps the first sensing function network element learn of the moment at which the one or more terminal devices exist in the sensing area.

In an optional implementation, the service requester further sends an association operation indication to the first sensing function network element, where the association operation indication indicates to determine the association relationship between the one or more terminal devices and the one or more objects in the sensing data obtained by the first sensing function network element. This manner helps the first sensing function network element determine the association relationship between the one or more terminal devices and the one or more objects based on the association operation indication.

In an optional implementation, the second information further indicates a moment corresponding to the association relationship between the one or more terminal devices and the one or more objects.

In an optional implementation, the second information further includes feature information of a terminal device associated with an object and/or feature information of a terminal device not associated with an object in the one or more terminal devices. Therefore, the service requester may further determine, based on the second information and feature information that is of the one or more terminal devices and that is configured in the service requester, whether each of the one or more terminal devices is associated with the object.

In an optional implementation, the second information further includes feature information of an object associated with the one or more terminal devices and/or feature information of an object associated with none of the one or more terminal devices in the one or more objects. This manner helps the service requester identify a type of each of the one or more objects.

In an optional implementation, the feature information indicates at least one of the following: a contour, a type, a trajectory, an orientation, or a velocity.

In an optional implementation, the service requester may further perform: sending third information to a second sensing function network element, where the third information includes a second identifier list and the sensing area, the second identifier list includes an identifier of one or more terminal devices, the identifier of the one or more terminal devices included in the second identifier list is different from the identifier of the one or more terminal devices included in the first identifier list, and an operator to which the second sensing function network element belongs is different from an operator to which the first sensing function network element belongs; and receiving fourth information from the second sensing function network element, where the fourth information indicates an association relationship between the one or more terminal devices in the second identifier list and the one or more objects.

It can be learned that, when a terminal device managed by an operator different from the operator to which the first sensing function network element belongs exists in the sensing area, the service requester may indicate, to the second sensing function network element corresponding to the operator different from the operator to which the first sensing function network element belongs, the one or more terminal devices managed by the operator in the sensing area, to obtain the association relationship between the one or more terminal devices and the one or more objects in the sensing area.

Optionally, when a terminal device managed by an operator different from the operator to which the first sensing function network element belongs and the operator to which the second sensing function network element belongs exists in the sensing area, the service requester may also indicate, to a sensing function network element corresponding to the operator different from the operator to which the first sensing function network element belongs and the operator to which the second sensing function network element belongs, one or more terminal devices managed by the operator in the sensing area, to obtain an association relationship between the one or more terminal devices and the one or more objects in the sensing area.

In an optional implementation, that the service requester determines, based on the second information, the terminal device cooperating with the service requester and/or the terminal device not cooperating with the service requester in the sensing area includes: determining, based on the second information and the fourth information, a terminal device cooperating with the service requester and/or a terminal device not cooperating with the service requester in the sensing area.

It can be learned that, when the service requester receives the association relationship between the one or more terminal devices and the one or more objects fed back by each of the first sensing function network element and the second sensing function network element, the service requester determines, based on the association relationship between the one or more terminal devices and the one or more objects fed back by each sensing function network element, the terminal device cooperating with the service requester and/or the terminal device not cooperating with the service requester in the sensing area.

According to a third aspect, an embodiment of this application further provides a communication apparatus. The communication apparatus has some or all functions of implementing the sensing function network element in the first aspect, or has some or all functions of implementing the service requester in the second aspect. For example, functions of the communication apparatus may have functions in some or all embodiments of the sensing function network element in the first aspect in embodiments of this application, or may have functions of independently implementing any one of embodiments of this application. The function may be implemented by hardware, or may be implemented by hardware executing corresponding software. The hardware or the software includes one or more units or modules corresponding to the functions.

In a possible design, a structure of the communication apparatus may include a processing unit and a communication unit. The processing unit is configured to support the communication apparatus in performing a corresponding function in the foregoing method. The communication unit is configured to support communication between the communication apparatus and another communication apparatus. The communication apparatus may further include a storage unit. The storage unit is configured to be coupled to the processing unit and the communication unit, and stores program instructions and data that are necessary for the communication apparatus.

In an implementation, the communication apparatus includes a processing unit and a communication unit, and the apparatus is used in a sensing function network element.

The communication unit is configured to receive first information from a service requester, where the first information includes an identifier list and a sensing area, and the identifier list includes an identifier of one or more terminal devices.

The communication unit is further configured to receive sensing data for the sensing area from a sensing device, where the sensing data includes location information of one or more objects.

The processing unit is configured to determine an association relationship between the one or more terminal devices and the one or more objects based on location information of the one or more terminal devices and the location information of the one or more objects.

The communication unit is further configured to send second information to the service requester, where the second information indicates the association relationship between the one or more terminal devices and the one or more objects.

In addition, for another optional implementation of the communication apparatus in this aspect, refer to the related content of the first aspect. Details are not described herein again.

In another implementation, the communication apparatus includes a processing unit and a communication unit, where the apparatus is used for a service requester, and the processing unit is configured to process a signal/signaling.

The communication unit is configured to send first information to a first sensing function network element, where the first information includes a first identifier list and a sensing area, and the first identifier list includes an identifier of one or more terminal devices.

The communication unit is further configured to receive second information from the first sensing function network element, where the second information indicates an association relationship between the one or more terminal devices and one or more objects in the sensing area.

In addition, for another optional implementation of the communication apparatus in this aspect, refer to the related content of the first aspect. Details are not described herein again.

For example, the communication unit may be a transceiver or a communication interface, the storage unit may be a memory, and the processing unit may be a processor.

In an implementation, the communication apparatus includes a processor and a transceiver, and the apparatus is used in a sensing function network element.

The transceiver is configured to receive first information from a service requester, where the first information includes an identifier list and a sensing area, and the identifier list includes an identifier of one or more terminal devices.

The transceiver is further configured to receive sensing data for the sensing area from a sensing device, where the sensing data includes location information of one or more objects.

The processor is configured to determine an association relationship between the one or more terminal devices and the one or more objects based on location information of the one or more terminal devices and the location information of the one or more objects.

The transceiver is further configured to send second information to the service requester, where the second information indicates the association relationship between the one or more terminal devices and the one or more objects.

In addition, for another optional implementation of the communication apparatus in this aspect, refer to the related content of the first aspect. Details are not described herein again.

In another implementation, the communication apparatus includes a processor and a transceiver, the apparatus is used for a service requester, and the processor is configured to process a signal/signaling.

The transceiver is configured to send first information to a first sensing function network element, where the first information includes a first identifier list and a sensing area, and the first identifier list includes an identifier of one or more terminal devices.

The transceiver is further configured to receive second information from the first sensing function network element, where the second information indicates an association relationship between the one or more terminal devices and one or more objects in the sensing area.

In addition, for another optional implementation of the communication apparatus in this aspect, refer to the related content of the second aspect. Details are not described herein again.

In another implementation, the communication apparatus is a chip or a chip system. The processing unit may alternatively be represented as a processing circuit or a logic circuit. The communication unit may be an input/output interface, an interface circuit, an output circuit, an input circuit, a pin, a related circuit, or the like on the chip or the chip system.

In an implementation process, the processor may be configured to perform, for example, but not limited to, baseband-related processing; and the transceiver may be configured to perform, for example, but not limited to, radio frequency receiving and sending. The foregoing components may be separately disposed on chips that are independent of each other, or at least some or all of the components may be disposed on a same chip. For example, the processor may be further divided into an analog baseband processor and a digital baseband processor. The analog baseband processor and the transceiver may be integrated on a same chip, and the digital baseband processor may be disposed on an independent chip. With continuous development of an integrated circuit technology, increasingly more components may be integrated on a same chip. For example, the digital baseband processor and a plurality of application processors (for example, but not limited to, a graphics processing unit and a multimedia processor) may be integrated on a same chip. Such a chip may be referred to as a system on a chip (system on a chip, SoC). Whether the components are separately disposed on different chips or integrated and disposed on one or more chips usually depends on a requirement of a product design. This embodiment of this application imposes no limitation on specific implementations of the foregoing components.

According to a fourth aspect, an embodiment of this application further provides a processor, configured to perform the foregoing methods. In a process of performing these methods, a process of sending the foregoing information and a process of receiving the foregoing information in the foregoing methods may be understood as a process of outputting the foregoing information by the processor and a process of receiving the foregoing input information by the processor. When outputting the information, the processor outputs the information to a transceiver, so that the transceiver transmits the information. After the information is output by the processor, other processing may further need to be performed on the information before the information arrives at the transceiver. Similarly, when the processor receives the input information, the transceiver receives the information, and inputs the information to the processor. Further, after the transceiver receives the information, other processing may need to be performed on the information before the information is input to the processor.

Operations such as sending and receiving related to the processor may be more generally understood as operations such as input, receiving, and output of the processor, instead of operations such as sending and receiving directly performed by a radio frequency circuit and an antenna, unless otherwise specified, or provided that the operations do not contradict actual functions or internal logic of the operations in related descriptions.

In an implementation process, the processor may be a processor specially configured to perform the methods, or a processor, for example, a general-purpose processor, that executes computer instructions in a memory to perform the methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this embodiment of this application.

According to a fifth aspect, an embodiment of this application further provides a communication system, where the system includes a sensing function network element and a service requester. Optionally, the system further includes a sensing device. In another possible design, the system may further include another device/function network element that interacts with the sensing function network element, the service requester, and the sensing device.

According to a sixth aspect, an embodiment of this application provides a computer-readable storage medium, configured to store instructions. When the instructions are run by a computer, the method according to the first aspect or the second aspect is implemented.

According to a seventh aspect, an embodiment of this application further provides a computer program product including instructions. When the computer program product runs on a computer, the method according to the first aspect or the second aspect is implemented.

According to an eighth aspect, an embodiment of this application provides a chip system. The chip system includes a processor and an interface. The interface is configured to obtain a program or instructions. The processor is configured to invoke the program or the instructions to implement or support a sensing function network element in implementing functions in the first aspect, or implement or support a service requester in implementing functions in the second aspect, for example, determining or processing at least one of data or information in the foregoing method. In a possible design, the chip system further includes a memory. The memory is configured to store program instructions and data that are necessary for a terminal. The chip system may include a chip, or may include a chip and another discrete component.

According to a ninth aspect, an embodiment of this application provides a communication apparatus, including a processor configured to execute a computer program or executable instructions stored in a memory. When the computer program or the executable instructions are executed, the apparatus is enabled to perform the method according to possible implementations of the first aspect or the second aspect.

In a possible implementation, the processor and the memory are integrated together.

In another possible implementation, the memory is located outside the communication apparatus.

For beneficial effects of the third aspect to the ninth aspect, refer to the beneficial effects of the first aspect or the second aspect. Details are not described herein again.

### BRIEF DESCRIPTION OF DRAWINGS

FIG. 1 is a diagram of a system architecture;
FIG. 2 is a diagram of sensing;
FIG. 3 is a diagram of interaction of a communication method according to an embodiment of this application;
FIG. 4 is a diagram of interaction of another communication method according to an embodiment of this application;
FIG. 5 is a diagram of interaction of still another communication method according to an embodiment of this application;
FIG. 6 is a diagram of a structure of a communication apparatus according to an embodiment of this application; and
FIG. 7 is a diagram of a structure of another communication apparatus according to an embodiment of this application.

### DESCRIPTION OF EMBODIMENTS

The following clearly and completely describes the technical solutions in embodiments of this application with reference to the accompanying drawings in embodiments of this application.

To better understand embodiments of this application, the following first describes a system architecture in embodiments of this application.

Embodiments of this application may be applied to a 4th generation (4th generation, 4G) communication system, for example, a long term evolution (long term evolution, LTE) system, and a 5th generation (5th generation, 5G) communication system, for example, a new radio (new radio, NR) system. With continuous development of communication technologies, the technical solutions in embodiments of this application may be further applied to subsequently evolved communication systems, for example, a 6th generation (6th Generation, 6G) mobile communication technology system and a 7th generation (7th Generation, 7G) mobile communication technology system.

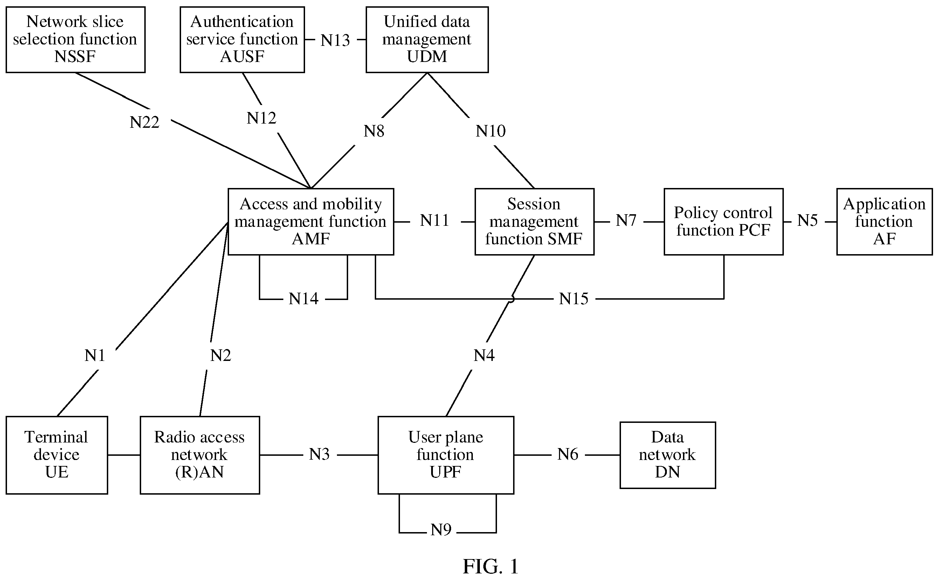

FIG. 1 is a diagram of a system architecture according to an embodiment of this application. The system architecture includes network function entities such as a terminal device, a (radio) access network ((radio) access network, (R)AN), a user plane function (user plane function, UPF), a data network (data network, DN), and an access and mobility management function (access and mobility management function, AMF). As shown in FIG. 1, the terminal device may access the wireless network, to obtain a service of an external network (for example, the data network (data network, DN)) through the wireless network or communicate with another device, for example, another terminal device, through the wireless network. The following separately describes in detail devices/function network elements involved in the system architecture in FIG. 1.

The terminal device may include various handheld devices, vehicle-mounted devices, wearable devices, or computing devices that have a wireless communication function, or other processing devices connected to a wireless modem. The terminal device may also be referred to as a terminal. The terminal device may alternatively be a user equipment (user equipment, UE), an access terminal, a subscriber unit (subscriber unit), a user agent, a cellular phone (cellular phone), a smartphone (smartphone), a wireless data card, a personal digital assistant (personal digital assistant, PDA) computer, a tablet computer, a wireless modem (modem), a handheld device (handset), a laptop computer (laptop computer), a smart point of sale (point of sale, POS), a customer-premises equipment (customer-premises equipment, CPE), a machine type communication (machine type communication, MTC) terminal, a communication device mounted on a high-altitude airplane, a wearable device, an uncrewed aerial vehicle, a robot, a terminal in device-to-device (device-to-device, D2D), a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. This is not limited in this application.

The RAN is a network including a plurality of 5G-RAN nodes, and is configured to implement a radio physical layer function, resource scheduling and radio resource management, radio access control, and a mobility management function. The 5G-RAN is connected to the UPF through a user plane interface N3, and is configured to perform transmission of data of the terminal device. The 5G-RAN establishes a control plane signaling connection to the AMF through a control plane interface N2, to implement functions such as radio access bearer control. The RAN node may be a base station in a 5G network or a base station in a future evolved communication system, a broadband network gateway (broadband network gateway, BNG), an aggregation switch, a non-3rd generation partnership project (3rd generation partnership project, 3GPP) access device, or the like. Optionally, the RAN node in this embodiment of this application may include various forms of base stations, for example, a macro base station, a micro base station (also referred to as a small cell), a relay station, an access point, a device that implements a base station function in a communication system evolved after 5G, a transmission reception point (transmission reception point, TRP), a transmitting point (transmitting point, TP), an integrated access and backhaul node (integrated access and backhaul node, IAB node), a mobile switching center, and a device that undertakes a base station function in D2D and machine-to-machine (machine-to-machine, M2M) communication. This is not specifically limited in this embodiment of this application.

The following network function entities may be understood as core network devices.

The AMF network element is mainly responsible for functions such as UE authentication, UE mobility management, network slice selection, and session management function (session management function, SMF) selection. The AMF network element serves as an anchor for connecting N1 signaling and N2 signaling, and provides routing of an N1/N2 SM message for the SMF network element. The AMF network element maintains and manages status information of a UE.

The SMF network element is mainly responsible for all control plane functions in UE session management, including UPF selection, internet protocol (internet protocol, IP) address allocation, quality of service (quality of service, QoS) management of a session, obtaining a policy and charging control (policy and charging control, PCC) policy (from a policy control function (policy control function, PCF)), and the like.

The UPF network element serves as an anchor point of a protocol data unit (protocol data unit, PDU) session connection, and is responsible for data packet filtering, data transmission/forwarding, rate control, charging information generation, and the like of the user equipment.

A unified data management (unified data management, UDM) network element mainly manages and controls user data, for example, manages subscription information, including: obtaining subscription information from a unified data repository (unified data repository, UDR) function network element and providing the subscription information for another network element (for example, the AMF network element); generating an authentication credential of a 3rd generation partnership project (3rd generation partnership project, 3GPP) for the UE; and registering and maintaining a network element currently serving the UE (for example, an AMF represented by an AMF ID 1 is a current serving AMF of the UE).

The UDR network element is mainly configured to store user data, including subscription data invoked by the UDM network element, policy information invoked by the PCF network element, structured data used for capability exposure, and application data invoked by a network exposure function (network element function, NEF) network element.

As a network capability exposure network element, the NEF network element is used for connection and interaction between another internal network element of a core network and an external application server of the core network, to provide network capability information for the external application server, or provide information about the external application server for the core network element.

An application function (application function, AF) network element interacts with a core network element to provide some services, for example, interacts with the PCF network element to perform service policy control, interacts with the NEF network element to obtain some network capability information or provide some application information for a network, and provides some data network access point information for the PCF network element to generate routing information of a corresponding data service.

An authentication service function (authentication service function, AUSF) network element is configured to perform security authentication on the UE when the UE accesses a network.

A network slice selection function (network slice selection function, NSSF) network element selects a slice instance set for the UE, and determines an AMF set and allowed slice selection assistance information (network slice selection assistance information, NSSAI) for the UE.

The PCF network element provides configuration policy information for the UE, and provides policy information for controlling the UE for a control plane network element (for example, the AMF network element or the SMF network element) in the network.

It may be understood that when the solutions in embodiments of this application are applied to a 6G or future communication system, a corresponding network function entity name may change. This is not limited in this application.

In a mobile communication system, when a radio frequency band (for example, a 4G frequency band, a 5G frequency band, a 6G frequency band, a millimeter-wave frequency band, or a terahertz frequency band) is used for a base station, a radar-like function, for example, radar-like target detection, may be implemented by using the mobile communication system. Specifically, the mobile communication system may sense the physical world by using transmission, reflection, and scattering of a radio wave, for example, obtain sensing measurement information by obtaining information about a distance, a velocity, and an angle from a radio signal, so that the sensing measurement information may be used for performing sensing and identification on a specific area/object/event, or the like.

A sensing function may be used for object locating, detection, and tracking, gesture capture and motion recognition of a person, target imaging, and the like. A possible application is directed to the security/regulation field, to detect and monitor areas corresponding to important infrastructure. For example, a railway department continuously monitors foreign object intrusions such as debris flows and landslides by deploying base stations, and a power station campus detects uncrewed aerial vehicle intrusions over the campus by deploying base stations. Another possible application is directed to a vehicle-road collaboration/autonomous driving/assisted driving/uncrewed aerial vehicle route planning scenario, to provide a beyond-line-of-sight sensing capability for a vehicle or an uncrewed aerial vehicle by using a base station sensing capability on a roadside, and provide road environment information for a driver in a timely manner, for example, detect a pedestrian/non-motor vehicle intruding into a road ahead, an obstacle that appears on a planned route, or the like.

Based on different application scenarios, when a base station with a sensing function is deployed, a sensing capability of the base station may be planned based on an application purpose and a specific deployment environment. Specific measurement of the sensing capability includes but is not limited to: distance resolution α, velocity resolution β, angle accuracy θ, and a horizontal angle of view (field of view, FOV). The distance resolution α refers to a capability of distinguishing between adjacent targets in terms of distance, is usually measured by using a minimum recognizable distance interval, and can identify different vehicles. The velocity resolution β refers to a capability of distinguishing between targets in terms of radial velocity, is usually measured by a minimum recognizable velocity interval, and can be used for distinguishing between vehicles with different velocities. The angle accuracy θ refers to an error between a measured value of a measured target in an angle and a real value, and may be used for determining a lane in which a vehicle is located. The horizontal angle of view FOV refers to a range (including a horizontal angle of view and a vertical angle of view) that can be sensed by a sensing device, and is represented by an angle.

After a base station in a 5G system has a sensing capability, the 5G system may be configured to sense application services. Types of the sensed application services may include but not limited to velocity testing of an object in a target area, monitoring of the target area (for providing a trajectory, target recognition, target counting, and the like of the object in the target area), imaging of the object in the target area (for describing a target contour and identifying a target type), and the like.

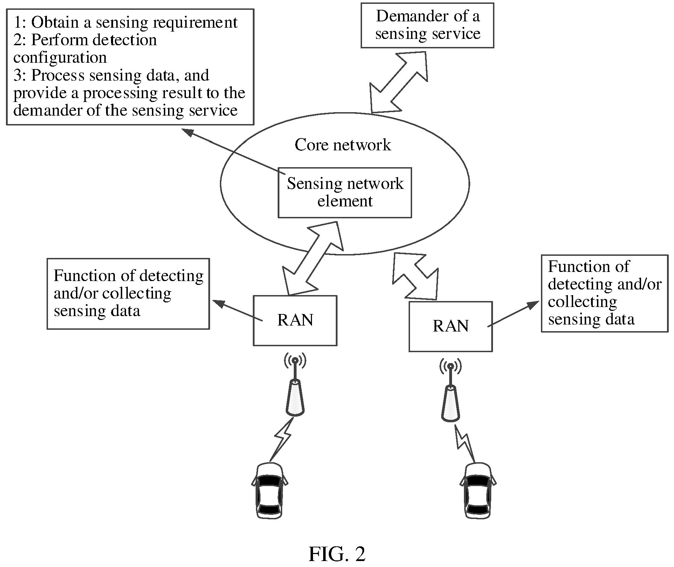

FIG. 2 is a diagram of sensing. As shown in FIG. 2, a sensing network element obtains a sensing requirement based on an internal requirement of a network or a requirement of a demander of a sensing service. The sensing network element performs detection configuration on a radio access network device based on the sensing requirement. The radio access network device detects and/or collects sensing data in a sensing area. After obtaining the sensing data through detection, the radio access network device provides the sensing data for the sensing network element. The sensing network element processes the sensing data, and provides a processing result for the demander of the sensing service, for example, for an AF network element.

The sensing network element may be, for example, a sensing function (sensing function, SF) network element, or may have another name such as a sensing network function (sensing network function, SNF) network element. For ease of description, an example in which the sensing network element is the SF network element is used below for description. In addition, the SF network element may be in an architecture in which a user plane and a control plane are separated. In other words, the SF network element may include a user plane module and a control plane module. In some implementations, the SF network element in embodiments of this application may be a sensing function network element-control plane (sensing function control plane, SF-C), or a sensing function network element-user plane (sensing function user plane, SF-U).

It should be noted that the SF network element may be one of network elements in a 5G core network (5G core, 5GC), or may be a non-core network element. This is not particularly limited in this application. When the SF network element is one of the network elements in the 5G core network, the SF network element can be connected to another network element in the 5G core network by using a service-based architecture (service-based architecture, SBA) interface, in other words, may communicate with the another network element in the 5G core network through the SBA interface. However, when the SF network element is the non-core network element, the SF network element cannot be connected to the another network element in the 5G core network through the SBA interface. In this case, the SF network element may need to interact with the another 5G core network element by performing forwarding by a NEF. Optionally, the SF network element may be implemented by another network element in the core network.

In addition, the SF may be an independently deployed network element or a network element deployed together with another device. For example, the SF may be a network element independently deployed in the core network or a network element deployed together with another core network device.

There may be a UE target and a non-UE target in the sensing area. The non-UE target is also referred to as a passive target/device, a non-UE target/device, a target/device without a subscriber identity module (subscriber identity module, SIM) card, a target, an object, or the like that is not associated with a UE. That is, the non-UE target is not a UE and is not associated with a UE device, and cannot be located by using a location service of an existing 3rd generation partnership project (3rd generation partnership project, 3GPP) system. Usually, the UE target can be identified by a regulator by using the 3GPP system and an identity of the UE. A sensing technology can identify presence of the non-UE target in the sensing area. The UE target in the sensing area may be associated with the non-UE target. For example, in a warehouse scenario, to facilitate logistics tracking of a cargo, a tag (tag) is usually attached to the cargo. The tag is considered as a UE target, and the cargo is considered as a non-UE target. The tag is attached to the cargo, so that the tag is a UE target associated with the cargo.

Some regulatory authorities may need to identify a terminal device cooperating with the regulatory authorities and a terminal device not cooperating with the regulatory authorities in the sensing area. For example, a cellular network-connected uncrewed aerial vehicle defined in 3GPP needs to use a control plane of a mobile network. After an authentication and authorization request of the uncrewed aerial vehicle is forwarded, a flight control operation can be performed only after being authorized by a supervision platform. The supervision platform can use the location service defined by 3GPP, to track the uncrewed aerial vehicle, obtain location information of the uncrewed aerial vehicle, and implement functions such as a geofence. However, a non-cooperative (an unauthenticated and unauthorized) uncrewed aerial vehicle may appear in a supervision area. For example, the unauthenticated and unauthorized uncrewed aerial vehicle may infiltrate in scenarios such as flight performance of an uncrewed aerial vehicle group and aerial photography of a major event. In another case, some UE targets in the target area are not allowed by the supervision platform or are not registered with or authorized by the supervision platform. As a result, the UE targets are also considered as non-cooperative targets.

Therefore, it is an important requirement of the regulatory authorities to learn of an actual target situation in the target area, including, for example, quantities, locations, and tracks of cooperative targets and non-cooperative targets. For example, it is a necessary requirement of the regulatory authorities to distinguish between a non-cooperative uncrewed aerial vehicle and an authenticated and authorized uncrewed aerial vehicle in the target area, and further track, monitor, and/or counteract the non-cooperative uncrewed aerial vehicle.

Embodiments of this application may be applied to some supervision scenarios, for example, tracking a UE device bound to a material, and implementing remote material security confirmation by confirming an association relationship between the UE device and the material target. Embodiments of this application may be further applied to a networked uncrewed aerial vehicle supervision scenario. To be specific, when there are authorized uncrewed aerial vehicles and non-cooperative uncrewed aerial vehicles in a target area, regulatory authorities may be assisted in sensing existence of the non-cooperative uncrewed aerial vehicles and determining which targets are the non-cooperative uncrewed aerial vehicles.

Embodiments of this application may be further applied to other scenarios, for example, a smart traffic/home/factory scenario. When a supervision/security protection application needs to know whether there is an association relationship between a monitored UE and a target object, whether the monitored UE exists in a target area (for example, whether a person carrying the UE moves in a specific vehicle/whether the person carrying the UE is a pedestrian, and whether a person wearing a smartwatch is in a safe area/whether a pet is in the safe area), which UEs are not associated as expected, and which targets may be non-cooperative targets.

Embodiments of this application provide a communication method 100. In the method, a service requester sends first information to an SF network element, where the first information includes an identifier list and a sensing area, and the identifier list includes an identifier of one or more terminal devices; the SF network element receives sensing data for the sensing area from a sensing device, where the sensing data includes location information of one or more objects; the SF network element determines an association relationship between the one or more terminal devices and the one or more objects based on location information of the one or more terminal devices and the location information of the one or more objects; and the SF network element indicates, to the service requester by using second information, the association relationship between the one or more terminal devices and the one or more objects. This manner helps the service requester determine, based on the association relationship between the one or more terminal devices and the one or more objects, a terminal device cooperating with the service requester and/or a terminal device not cooperating with the service requester in the one or more terminal devices.

Embodiments of this application provide a communication method 200. In comparison with the communication method 100, the communication method 200 reflects a multi-operator scenario. In the communication method 200, a service requester sends first information to a first sensing function network element, and sends third information to a second sensing function network element, where the first information includes a first identifier list and a sensing area, the first identifier list includes location information of one or more terminal devices, the third information includes a second identifier list and the sensing area, the second identifier list includes location information of one or more terminal devices, and the one or more terminal devices included in the first identifier list are different from the one or more terminal devices included in the second identifier list, an operator to which the first sensing function network element belongs is different from an operator to which the second sensing function network element belongs. The first sensing function network element receives first sensing data of a first sensing device for the sensing area, where the first sensing data includes location information of one or more objects. The first sensing function network element determines an association relationship between the one or more terminal devices and the one or more objects based on the location information of the one or more terminal devices in the first identifier list and the location information of the one or more objects in the first sensing data, and indicates, to the service requester by using second information, the association relationship between the one or more terminal devices and the one or more objects. The second sensing function network element receives second sensing data of a second sensing device for the sensing area, where the second sensing data includes the location information of the one or more objects. The second sensing function network element determines an association relationship between the one or more terminal devices and the one or more objects based on the location information of the one or more terminal devices in the second identifier list and the location information of the one or more objects in the second sensing data, and indicates, to the service requester by using fourth information, the association relationship between the one or more terminal devices and the one or more objects. This helps the service requester determine, based on the second information and the fourth information, a terminal device cooperating with the service requester and/or a terminal device not cooperating with the service requester.

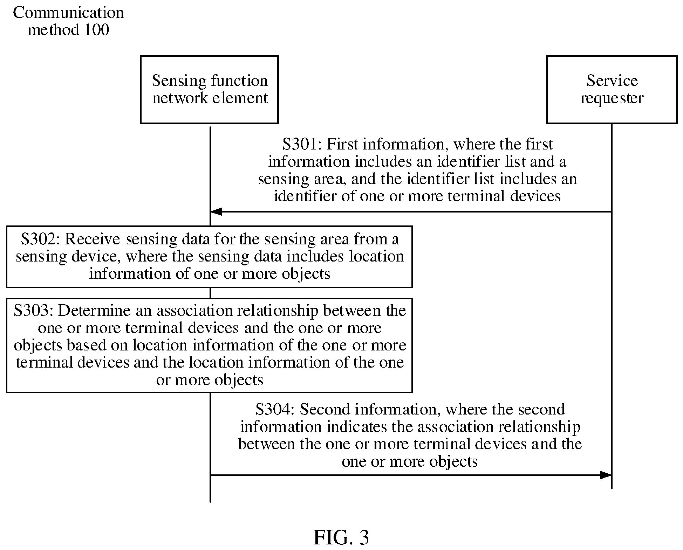

An embodiment of this application provides a communication method 100. FIG. 3 is a diagram of interaction of the communication method 100. The communication method 100 is described from a perspective of interaction between a sensing function network element and a service requester. The communication method 100 includes but is not limited to the following steps.

S301: The service requester sends first information to the sensing function network element, where the first information includes an identifier list and a sensing area, and the identifier list includes an identifier of one or more terminal devices. Correspondingly, the sensing function network element receives the first information from the service requester.

The sensing area is an area in which sensing is to be performed by the SF network element as requested by the service requester.

In an optional implementation, before sending the first information to the SF network element, the service requester determines the one or more terminal devices that are managed, in the sensing area, by an operator to which the SF network element belongs. Therefore, the one or more terminal devices are terminal devices managed, in the sensing area, by the operator to which the SF network element belongs.

It can be learned that the service requester indicates, to the SF network element by using the identifier list in the first information, the one or more terminal devices managed, in the sensing area, by the operator to which the SF network element belongs.

In addition, the first information is used for triggering the SF network element to determine an association relationship between the one or more terminal devices and one or more objects based on location information of the one or more terminal devices and location information of the one or more objects in sensing data obtained by the SF network element. Therefore, the service requester sending the first information to the SF network element helps the SF network element determine the association relationship between the one or more terminal devices and the one or more objects based on the location information of the one or more terminal devices and the location information of the one or more objects in the sensing data obtained by the SF network element.

In an optional implementation, the first information is carried in a sensing request, and the sensing request is used for requesting the sensing function network element to perform sensing in the sensing area. It can be learned that the service requester may send the identifier list and the sensing area to the SF network element by using the sensing request, so that signaling overheads can be reduced.

In an optional implementation, the service requester further sends an association operation indication to the sensing function network element, where the association operation indication indicates to determine the association relationship between the one or more terminal devices in the identifier list and the one or more objects in the sensing data obtained by the sensing function network element. Correspondingly, the sensing function network element obtains the association operation indication from the service requester. In this manner, after receiving the first information, the SF network element may determine, based on the association operation indication, the association relationship between the one or more terminal devices in the identifier list and the one or more objects in the sensing data obtained by the SF network element.

A name of the "association operation indication" is not limited in this embodiment of this application. Optionally, the name of the "association operation indication" may be replaced with one of the following: a target association verification indication, a target identification indication, a target verification indication, a target sensing indication, a target existence indication, or a target compliance indication. Optionally, the name of the "association operation indication" may alternatively be replaced with one of the following: a UE target association verification indication, a UE target identification indication, a UE target verification indication, a UE target sensing indication, a UE target existence indication, or a UE target compliance indication. The target identification indication, the target verification indication, the target sensing indication, the target existence indication, the target compliance indication, the UE target identification indication, the UE target verification indication, the UE target sensing indication, the UE target existence indication, or the UE target compliance indication indicates to determine the association relationship between the one or more terminal devices in the identifier list and the one or more objects in the sensing data obtained by the sensing function network element.

Optionally, the "indication" in the "association operation indication" may alternatively be replaced with a "request" or a "request type". That is, the "request type" may be used in the sensing request to indicate a purpose represented by the foregoing indication. For example, the "association operation indication" may be replaced with an "association operation request", or the request type is set to an "association operation", and the association operation request is used for requesting to determine the association relationship between the one or more terminal devices in the identifier list and the one or more objects in the sensing data obtained by the sensing function network element. Similarly, the target association verification indication, the target identification indication, the target verification indication, the target sensing indication, the target existence indication, the target compliance indication, the UE target association verification indication, the UE target identification indication, the UE target verification indication, the UE target sensing indication, the UE target existence indication, or the UE target compliance indication may be respectively replaced with: a target association verification request, a target identification request, a target verification request, a target sensing request, a target existence request, a target compliance request, a UE target association verification request, a UE target identification request, a UE target verification request, a UE target sensing request, a UE target existence request, or a UE target compliance request.

S302: The sensing function network element receives the sensing data for the sensing area from a sensing device, where the sensing data includes the location information of the one or more objects.

The sensing device is a device that is determined by the SF network element and configured to perform sensing in the sensing area. The sensing device may be a radio access network device, a terminal device, or the like. In addition, the one or more objects are objects obtained by performing sensing in the sensing area by the sensing device, and the location information of the one or more objects is obtained by the sensing device by performing sensing in the sensing area.

In an optional implementation, before obtaining the sensing data for the sensing area from the sensing device, the SF network element sends the sensing request to the sensing device, to request the sensing device to perform sensing in the sensing area. Therefore, the sensing device performs sensing in the sensing area to obtain the sensing data, and sends the sensing data to the SF network element. Further, the SF network element receives the sensing data for the sensing area from the sensing device.

In another optional implementation, after receiving the sensing request from the service requester, the SF network element controls the sensing device to perform sensing in the sensing area, and the sensing device continuously performs sensing in the sensing area for long time, and sends the sensing data to the SF network element. Therefore, the SF network element continuously receives the sensing data for the sensing area from the sensing device for long time.

Optionally, that the sensing data includes the location information of the one or more objects may be understood as: The sensing data directly includes location information of each of the one or more objects. For example, the one or more objects in the sensing area include an object A and an object B, and the sensing data includes location information of the object A and location information of the object B.

Optionally, that the sensing data includes the location information of the one or more objects may be understood as: The sensing data includes information related to location information of each of the one or more objects. That is, the sensing data includes unprocessed information related to the location information of the one or more objects. The SF network element processes the information related to the location information of each object, to obtain the location information of each object, and further obtain the location information of the one or more objects. For example, the sensing data includes original data that is of the one or more objects and that is obtained by the sensing device by performing sensing in the sensing area. The original data may be in-phase (in-phase)/quadrature (orthogonal) data (that is, I/Q data) of a radio frequency signal, or may be understood as a time domain digital signal obtained by the sensing device by performing analogue-to-digital (analogue-to-digital, A/D) conversion on a received reflected signal (or echo signal). The SF network element processes the original data of the one or more objects, to obtain the location information of the one or more objects.

For another example, the sensing data includes spectrum information that is of the one or more objects and that is obtained by the sensing device by performing sensing in the sensing area. The spectrum information includes a range velocity (range velocity, RV) spectrum, a range Doppler (range Doppler, RD) spectrum, a range velocity angle (range velocity angle, RVA) spectrum, and a range Doppler angle (range Doppler angle, RDA) spectrum. The SF network element processes the spectrum information of the one or more objects, to obtain the location information of the one or more objects.

For another example, the sensing data includes point cloud information that is of the one or more objects and that is obtained by the sensing device by performing sensing in the sensing area. The point cloud information may be understood as location information and a velocity of a scattering point detected by the sensing device. The SF network element processes the point cloud information of the one or more objects, to obtain the location information of the one or more objects.

In addition, the location information of the one or more objects may be understood as a geographical location of each of the one or more objects, or may be understood as a track including a plurality of locations of each of the one or more objects. For example, the one or more objects include an object a and an object b. Location information of the object a and location information of the object b are respectively a geographical location of the object a and a geographical location of the object b. Alternatively, the location information of the object a is a track 1 determined based on locations of the object a at a location 1 and a location 2, and the location information of the object b is a track 2 determined based on locations of the object b at a location 3 and a location 4.

S303: The sensing function network element determines the association relationship between the one or more terminal devices and the one or more objects based on the location information of the one or more terminal devices and the location information of the one or more objects.

In an optional implementation, before determining the association relationship between the one or more terminal devices and the one or more objects based on the location information of the one or more terminal devices and the location information of the one or more objects, the SF network element obtains the location information of the one or more terminal devices based on a location service (location service, LCS). Similar to the location information of the one or more objects, the location information of the one or more terminal devices may be understood as a geographical location of each of the one or more terminal devices, or may be understood as a track including a plurality of locations of each of the one or more terminal devices.

It may be understood that the SF network element learns of the one or more terminal devices based on the identifier list, to obtain the location information of the one or more terminal devices based on the location service.

In another optional implementation, before determining the association relationship between the one or more terminal devices and the one or more objects based on the location information of the one or more terminal devices and the location information of the one or more objects, the SF network element obtains the location information of the one or more terminal devices from the service requester.

It may be understood that before the SF network element determines the association relationship between the one or more terminal devices and the one or more objects based on the location information of the one or more terminal devices and the location information of the one or more objects, the service requester sends the location information of the one or more terminal devices to the SF network element, so that the SF network element receives the location information of the one or more terminal devices from the service requester.

The location information of the one or more terminal devices may be carried in the first information, or may not be carried in the first information. When the location information of the one or more terminal devices is carried in the first information, signaling overheads can be reduced.

Optionally, before sending the location information of the one or more terminal devices to the SF network element, the service requester further obtains the location information of the one or more terminal devices based on the location service. Optionally, before sending the location information of the one or more terminal devices to the SF network element, the service requester receives location information reported by each of the one or more terminal devices, to obtain the location information of the one or more terminal devices.

It can be learned that, when the service requester sends the location information of the one or more terminal devices to the SF network element, the location information of the one or more terminal devices may be obtained by the service requester based on the location service, or may be reported by each of the one or more terminal devices to the service requester. Therefore, the service requester may send the obtained location information of the one or more terminal devices to the SF network element.

In an optional implementation, when obtaining the location information of the one or more terminal devices from the service requester, the SF network element may further obtain, from the service requester, a first timestamp associated with the location information of the one or more terminal devices. That the first timestamp is associated with the location information of the one or more terminal devices may be understood as: The location information of the one or more terminal devices is obtained by the service requester at a moment indicated by the first timestamp or within a time range indicated by the first timestamp. For example, the location information of the one or more terminal devices is obtained, based on the location service, by the service requester at the moment indicated by the first timestamp or within the time range indicated by the first timestamp. For another example, the location information of the one or more terminal devices is reported by each of the one or more terminal devices to the service requester at the moment indicated by the first timestamp or within the time range indicated by the first timestamp.

Optionally, if the location information of the one or more terminal devices is reported by each of the one or more terminal devices to the service requester, the first timestamp may be reported together with the location information by each terminal device to the service requester, or may be a moment at which the service requester receives the location information of the one or more terminal devices or a time range within which the service requester receives the location information of the one or more terminal devices.

If the SF network element obtains the first timestamp associated with the location information of the one or more terminal devices, that the SF network element determines the association relationship between the one or more terminal devices and the one or more objects based on the location information of the one or more terminal devices and the location information of the one or more objects includes: determining the association relationship between the one or more terminal devices and the one or more objects based on the location information of the one or more terminal devices and location information of the one or more objects at the moment indicated by the first timestamp or within the time range indicated by the first timestamp.

It can be learned that the location information that is of the one or more objects and that is used by the SF network element is obtained by the sensing device by performing sensing in the sensing area at the moment indicated by the first timestamp or within the time range indicated by the first timestamp, and the used location information of the one or more terminal devices is also obtained at the moment indicated by the first timestamp or within the time range indicated by the first timestamp. Therefore, the SF network element determines the association relationship between the one or more terminal devices and the one or more objects based on the location information of the one or more terminal devices and the location information of the one or more objects that are at a same moment or within a same time range. In this manner, accuracy of the association relationship between the one or more terminal devices and the one or more objects can be improved.

In another optional implementation, the SF network element obtains, from the service requester, a second timestamp associated with the identifier list, where the second timestamp indicates a moment at which the one or more terminal devices exist in the sensing area. The second timestamp associated with the identifier list may be carried in the first information, or may be carried in information different from the first information.

Optionally, when the SF network element does not obtain, from the service requester, the second timestamp associated with the identifier list, the SF network element uses time at which the identifier list is received as the second timestamp associated with the identifier list.

If the SF network element obtains or determines the second timestamp associated with the identifier list, and the SF network element obtains the location information of the one or more terminal devices based on the location service, the SF network element obtains the location information of the one or more terminal devices based on the location service at the moment indicated by the second timestamp or within a time range indicated by the second timestamp.

When the SF network element obtains or determines the second timestamp associated with the identifier list, that the SF network element determines the association relationship between the one or more terminal devices and the one or more objects based on the location information of the one or more terminal devices and the location information of the one or more objects includes: determining the association relationship between the one or more terminal devices and the one or more objects based on the location information of the one or more terminal devices and location information of the one or more objects at the moment indicated by the second timestamp or within the time range indicated by the second timestamp.

It can be learned that, if the SF network element obtains or determines the second timestamp associated with the identifier list, the SF network element also determines the association relationship between the one or more terminal devices and the one or more objects based on location information of the one or more terminal devices and location information of the one or more objects that are at a same moment or within a same time range. This can improve the accuracy of the association relationship between the one or more terminal devices and the one or more objects.

It may be understood that when the identifier list includes different quantities of terminal device identifiers, there are different implementations for the SF network element to determine the association relationship between the one or more terminal devices and the one or more objects based on the location information of the one or more terminal devices and the location information of the one or more objects. The following describes, based on quantities of terminal device identifiers included in the identifier list, determining, by the SF network element, the association relationship between the one or more terminal devices and the one or more objects based on the location information of the one or more terminal devices and the location information of the one or more objects.

Implementation 1: The identifier list includes an identifier of one terminal device, and the SF network element determines, based on location information of the one terminal device and the location information of the one or more objects, whether the one terminal device is associated with an object in the one or more objects.

It can be learned that when the identifier list includes the identifier of the one terminal device, that the SF network element determines the association relationship between the one or more terminal devices and the one or more objects based on the location information of the one or more terminal devices and the location information of the one or more objects includes: determining, based on the location information of the one terminal device and the location information of the one or more objects, whether the one terminal device is associated with an object in the one or more objects.

In an optional implementation, that the SF network element determines, based on the location information of the one terminal device and the location information of the one or more objects, whether the one terminal device is associated with an object in the one or more objects includes: when the location information of the one terminal device is the same as one of the location information of the one or more objects, determining that the one terminal device is associated with an object in the one or more objects; and when the location information of the one terminal device is different from all of the location information of the one or more objects, determining that the one terminal device is not associated with an object in the one or more objects.

That a terminal device is associated with an object may be understood as: There is an association relationship between the terminal device and the object. For example, the terminal device is disposed on, bound to, or mounted on the object. Similarly, that a terminal device is not associated with an object may be understood as: There is no association relationship between the terminal device and the object. For example, the terminal device is not disposed on, bound to, or mounted on the object.

In addition, that the location information of the one terminal device is the same as one of the location information of the one or more objects may be understood as: The location information of the one terminal device is completely the same as or completely matches the one of the location information of the one or more objects.

Optionally, that the location information of the one terminal device is the same as one of the location information of the one or more objects may be understood as: The location information of the one terminal device is the same as or matches the one of the location information of the one or more objects within a preset range. The preset range may be configured by the service requester for the SF network element, or may be negotiated by the service requester and the SF network element in advance.

Similarly, that the location information of the one terminal device is different from all of the location information of the one or more objects may be understood as: The location information of the one terminal device is completely the same as or completely matches none of the location information of the one or more objects, or may be understood as: The location information of the one terminal device is the same as or matches none of the location information of the one or more objects within the preset range.

For example, the identifier list includes an identifier of a UE 1, and the sensing data that is for the sensing area and that is received by the SF network element from the sensing device includes location information of an object 1 and location information of an object 2. If location information of the UE 1 is completely the same as the location information of the object 2, the SF network element determines that the UE 1 is associated with the object 2. If the location information of the UE 1 is the same as the location information of the object 2 in a preset range, the SF also determines that the UE 1 is associated with the object 2. If the location information of the UE 1 is different from both the location information of the object 1 and the location information of the object 2, or is different both the location information of the object 1 and the location information of the object 2 within the preset range, the SF determines that the UE 1 is associated with neither the object 1 nor the object 2.

Implementation 2: The identifier list includes identifiers of a plurality of terminal devices, and the SF determines, based on location information of the plurality of terminal devices and the location information of the one or more objects, a terminal device associated with an object in the one or more objects and/or a terminal device not associated with an object in the one or more objects in the plurality of terminal devices.

It can be learned that when the identifier list includes the identifiers of the plurality of terminal devices, that the SF network element determines the association relationship between the one or more terminal devices and the one or more objects based on the location information of the one or more terminal devices and the location information of the one or more objects includes: The SF determines, based on the location information of the plurality of terminal devices and the location information of the one or more objects, the terminal device associated with an object in the one or more objects and/or the terminal device not associated with an object in the one or more objects in the plurality of terminal devices.

In an optional implementation, that the SF network element determines, based on the location information of the plurality of terminal devices and the location information of the one or more objects, the terminal device associated with an object in the one or more objects and/or the terminal device not associated with an object in the one or more objects in the plurality of terminal devices includes: determining, as a terminal device associated with an object in the one or more objects, a terminal device corresponding to location information that is in the location information of the plurality of terminal devices and that is the same as the location information of the one or more objects; and/or determining, as a terminal device not associated with an object in the one or more objects, a terminal device corresponding to location information that is in the location information of the plurality of terminal devices and that is different from all of the location information of the one or more objects.

It may be understood that the SF network element determines, based on the location information of the plurality of terminal devices, whether location information of each terminal device is the same as the location information of the one or more objects. If the location information of the terminal device is the same as the location information of the one or more objects, the SF network element determines the terminal device as a terminal device associated with an object in the one or more objects. If the location information of the terminal device is different from all of the location information of the one or more objects, the SF network element determines the terminal device as a terminal device not associated with an object in the one or more objects. The SF network element determines, based on whether each terminal device is associated with an object, the terminal device associated with an object and/or the terminal device not associated with an object in the plurality of terminal devices.

It can be learned that, the terminal device associated with an object in the plurality of terminal devices is a terminal device whose location information is the same as location information of one of the one or more objects, and the terminal device not associated with an object in the plurality of terminal devices is a terminal device whose location information is different from location information of each of the one or more objects.

The location information that is in the location information of the plurality of terminal devices and that is the same as the location information of the one or more objects may be understood as location information that is in the location information of the plurality of terminal devices and that is completely the same as or completely matches the location information of the one or more objects, or may be understood as location information that is in the location information of the plurality of terminal devices and that is the same as or matches the location information of the one or more objects within a preset range. The preset range may be configured by the service requester for the SF network element, or may be negotiated by the service requester and the SF network element in advance.

For example, the identifier list includes an identifier of a UE 1 and an identifier of a UE 2, and the one or more objects include an object 1, an object 2, and an object 3. If location information of the UE 1 is completely the same as location information of the object 1, and location information of the UE 2 is different from both location information of the object 2 and location information of the object 3, the SF network element determines that a UE associated with an object in the UE 1 and the UE 2 is the UE 1, and a UE not associated with an object is the UE 2.

In an optional implementation, the SF network element does not obtain the location information of the one or more terminal devices, and obtains the second timestamp associated with the identifier list. In this case, the identifier list may include a quantity of terminal devices. Therefore, the SF network element determines, based on the quantity of terminal devices included in the identifier list and a quantity of one or more objects sensed by the sensing device for the sensing area at the moment indicated by the second timestamp or within the time range indicated by the second timestamp, whether an abnormality exists in the sensing area. For example, if the quantity of terminal devices included in the identifier list is greater than the quantity of one or more objects in the sensing area, the SF network element determines that there is the abnormality in the sensing area at the moment indicated by the second timestamp or within the time range indicated by the second timestamp. For example, there may be an unauthorized terminal device in the terminal device in the sensing area.

S304: The sensing function network element sends second information to the service requester, where the second information indicates the association relationship between the one or more terminal devices and the one or more objects. Correspondingly, the service requester receives the second information from the sensing function network element.

It may be understood that a specific form of the second information varies with different implementations for the SF network element to determine the association relationship between the one or more terminal devices and the one or more objects based on the location information of the one or more terminal devices and the location information of the one or more objects. Specific manners of the second information are described below with reference to the implementations for the SF network element to determine the association relationship between the one or more terminal devices and the one or more objects based on the location information of the one or more terminal devices and the location information of the one or more objects.

Manner a: The second information specifically indicates whether the one terminal device is associated with an object in the one or more objects.

As described in Implementation 1, when the identifier list includes the identifier of the one terminal device, the SF network element determines, based on the location information of the one terminal device and the location information of the one or more objects, whether the one terminal device is associated with an object in the one or more objects. Therefore, when the identifier list includes the identifier of the one terminal device, the second information specifically indicates whether the one terminal device is associated with an object in the one or more objects.

In an optional implementation, the second information includes an association indication and the identifier of the one terminal device, or the second information includes a non-association indication and the identifier of the one terminal device. The association indication indicates that the one terminal device is associated with an object in the one or more objects, and the non-association indication indicates that the one terminal device is not associated with an object in the one or more objects.

Specifically, when the SF network element determines that the one terminal device is associated with an object in the one or more objects, the second information includes the association indication and the identifier of the one terminal device. When the SF determines that the one terminal device is not associated with an object in the one or more objects, the second information includes the non-association indication and the identifier of the one terminal device.

Specific forms of the association indication and the non-association indication are not limited in this embodiment of this application. For example, the association indication is "1", and the non-association indication is "0". For another example, the association indication is "0", and the non-association indication is "1". For ease of description, an example in which the association indication is "1" and the non-association indication is "0" is used below for description.

For example, the identifier list includes an identifier of a UE 1. If the second information includes "1" and the identifier of the UE 1, it indicates that the UE 1 is associated with an object in the one or more objects. If the second information includes "0" and the identifier of the UE 1, it indicates that the UE 1 is not associated with an object in the one or more objects.

In another optional implementation, the second information includes the association indication and does not include the identifier of the one terminal device; or the second information includes the non-association indication and does not include the identifier of the one terminal device. It can be learned that the second information includes the association indication or the non-association indication.

When the second information includes the association indication, the service requester considers, by default, that the one terminal device indicated to the SF network element is associated with an object in the one or more objects in the sensing area. When the second information includes the non-association indication, the service requester considers, by default, that the one terminal device indicated to the SF network element is not associated with an object in the one or more objects in the sensing area.

For example, the identifier list includes an identifier of a UE 1. If the second information includes "1", the service requester considers, by default, that the UE 1 is associated with an object in the one or more objects in the sensing area. If the second information includes "0", the service requester considers, by default, that the UE 1 is not associated with an object in the one or more objects in the sensing area.

Manner b: The second information specifically indicates an identifier of the terminal device associated with an object in the one or more objects and/or an identifier of the terminal device not associated with an object in the one or more objects in the plurality of terminal devices.

As described in Implementation 2, when the identifier list includes the identifiers of the plurality of terminal devices, the SF network element determines, based on the location information of the plurality of terminal devices and the location information of the one or more objects, the terminal device associated with an object in the one or more objects and/or the terminal device not associated with an object in the one or more objects in the plurality of terminal devices. Therefore, when the identifier list includes the identifiers of the plurality of terminal devices, the second information specifically indicates the identifier of the terminal device associated with an object in the one or more objects and/or the identifier of the terminal device not associated with an object in the one or more objects in the plurality of terminal devices.

In an optional implementation, the second information includes an association indication and an identifier of a terminal device corresponding to the association indication, and/or a non-association indication and a terminal device corresponding to the non-association indication. For the association indication and the non-association indication, refer to the foregoing descriptions. Details are not described again.

Optionally, the association indication and an identifier of one or more terminal devices that are in the plurality of terminal devices and that are associated with an object in the one or more objects are carried in an information element, and the non-association indication and an identifier of one or more terminal devices that are in the plurality of terminal devices and that are not associated with an object in the one or more objects are carried in an information element. Therefore, if the service requester receives the information element that carries the association indication, the service requester determines that one or more terminal devices corresponding to the identifier of the one or more terminal devices in the information element are terminal devices associated with an object. If the SF network element receives the information element that carries the non-association indication, the SF network element determines that one or more terminal devices corresponding to the identifier of the one or more terminal devices in the information element are terminal devices not associated with an object.

For example, if the second information includes an identifier of a UE 1, an identifier of a UE 2, and "1", it indicates that the UE 1 and the UE 2 are terminal devices associated with an object. For another example, if the second information includes an identifier of a UE 3, an identifier of a UE 4, and "0", it indicates that the UE 3 and the UE 4 are terminal devices not associated with an object. For another example, if the second information includes an information element 1 and an information element 2, the information element 1 includes an identifier of a UE 1, an identifier of a UE 2, and "1", and the information element 2 includes an identifier of a UE 3, an identifier of a UE 4, and "0", it indicates that the UE 1 and the UE 2 are terminal devices associated with an object, and the UE 3 and the UE 4 are terminal devices not associated with an object.

Optionally, the association indication and the identifier of the one or more terminal devices that are in the plurality of terminal devices and that are associated with an object in the one or more objects are carried in different information elements, and the non-association indication and the identifier of the one or more terminal devices that are in the plurality of terminal devices and that are not associated with an object in the one or more objects are also carried in different information elements. The service requester determines, based on the association indication and the identifier of the terminal device that are included in the information element and/or the non-association indication and the identifier of the terminal device that are included in the information element in a plurality of received information elements, the terminal device associated with an object and/or the terminal device not associated with an object in the plurality of terminal devices.

In another optional implementation, the second information includes the identifier of the terminal device associated with an object in the one or more objects and/or the identifier of the terminal device not associated with an object in the one or more objects in the plurality of terminal devices, and does not include an association indication or a non-association indication. It may be understood that the identifier of the one or more terminal devices that are in the plurality of terminal devices and that are associated with an object in the one or more objects is carried in a same information element, and the information element implicitly indicates that the terminal device is associated with an object. Therefore, after receiving the information element, the service requester may determine that one or more terminal devices corresponding to the identifier of the one or more terminal devices in the information element are associated with an object. In addition, the identifier of the one or more terminal devices that are in the plurality of terminal devices and that are not associated with an object in the one or more objects is carried in another information element, and the information element implicitly indicates that the terminal device is not associated with an object. Therefore, after receiving the information element, the service requester may determine that one or more terminal devices corresponding to the identifier of the one or more terminal devices in the information element are not associated with an object.

Optionally, the service requester and the SF network element may negotiate, in advance, the information element implicitly indicating that the terminal device is associated with an object, and the information element implicitly indicating that the terminal device is not associated with an object.

For example, the service requester and the SF network element negotiate, in advance, an information element #a implicitly indicating that the terminal device is associated with an object, and an information element #b implicitly indicating that the terminal device is not associated with an object. The identifier list includes identifiers of a UE 1, a UE 2, a UE 3, and a UE 4. The sensing data that is for the sensing area and that is received by the SF network element from the sensing device includes location information of an object 1, an object 2, and an object 3. The SF network element determines, based on the location information of the UE 1, the UE 2, the UE 3, and the UE 4, and the location information of the object 1, the object 2, and the object 3, that the UE 1 is associated with the object 2, the UE 2 is associated with the object 3, and the UE 3 and the UE 4 are not associated with an object in the object 1, the object 2, and the object 3. In this case, the second information includes the information element a and the information element b, where the information element a includes the identifiers of the UE 1 and the UE 2, and the information element b includes the identifiers of the UE 3 and the UE 4.

In an optional implementation, the second information further indicates a moment corresponding to the association relationship between the one or more terminal devices and the one or more objects. In other words, the moment indicated by the second information is a moment at which the association relationship between the one or more terminal devices and the one or more objects exists. In this manner, the service requester may learn of the association relationship between the one or more terminal devices and the one or more objects at the moment indicated by the second information, so that the service requester can determine, based on information that is about the terminal device and that is configured in the service requester at the moment, whether each of the one or more terminal devices is authorized, or determine whether the terminal device associated with an object at the moment deviates from an expected track.

Specifically, when the identifier list includes the identifier of the one terminal device, the second information further indicates a moment corresponding to whether the one terminal device is associated with an object in the one or more objects. When the identifier list includes the identifiers of the plurality of terminal devices, the second information further indicates a moment corresponding to the terminal device associated with an object in the one or more objects and/or a moment corresponding to the terminal device not associated with an object in the one or more objects in the plurality of terminal devices.

For example, the identifier list includes an identifier of a UE 1. The SF network element determines, based on location information of the UE 1 at a moment t1 and location information of an object 1 and an object 2 at the moment t1 in the sensing area, that the UE 1 is associated with the object 1. In this case, the second information includes the identifier of the UE 1, the moment t1, and "1".

For another example, the identifier list includes identifiers of a UE 1, a UE 2, and a UE 3. The SF network element determines, based on location information of the UE 1, the UE 2, and the UE 3 at a moment t2 and location information of an object 1 and an object 2 at the moment t2 in the sensing area, that the UE 1 is associated with the object 2, and that both the UE 2 and the UE 3 are not associated with the object 1 and the object 2. In this case, the second information includes "1", the identifier of the UE 1 corresponding to "1", "0", the identifiers of the UE 2 and the UE 3 corresponding to "0", and the moment t2.

In an optional implementation, the second information further includes feature information of a terminal device associated with an object and/or feature information of a terminal device not associated with an object in the one or more terminal devices. The feature information may indicate at least one of the following: a contour, a type, a trajectory, an orientation, or a velocity.

Optionally, when the second information further includes the feature information of the terminal device associated with an object and/or the feature information of the terminal device not associated with an object in the one or more terminal devices, the service requester may further determine, based on the second information and feature information that is of the one or more terminal devices and that is configured in the service requester, whether each of the one or more terminal devices is associated with an object. It can be learned that the service requester may check again whether each of the one or more terminal devices is associated with an object.

Optionally, the second information further includes feature information of an object associated with the one or more terminal devices and/or feature information of an object associated with none of the one or more terminal devices in the one or more objects. In this manner, the service requester may further identify, based on the received feature information of the object, types of the object associated with the terminal device and the object not associated with the terminal device, and may further determine whether the object not associated with the terminal device is abnormal.

For example, the identifier list includes identifiers of a UE 1 and a UE 2, the one or more objects include an object 1, an object 2, and an object 3, the UE 1 is associated with the object 1, the UE 2 is associated with the object 3, and the second information further includes feature information of the object 1 and the object 3 that are associated with the UE 1 and the UE 2 respectively, and feature information of the object 2 not associated with the UE 1, the UE 2, and the UE 3.

Optionally, the second information further includes an identifier of an object associated with the terminal device and/or an identifier of an object not associated with the terminal device in the one or more objects. In this manner, the service requester may learn of the object associated with the terminal device and/or the object not associated with the object in the one or more objects in the sensing area, so that the service requester can determine whether a device in the one or more terminal devices is associated as expected, for example, whether a terminal device is associated with a specific object as expected.

Optionally, the second information may be carried in a sensing result sent by the SF network element to the service requester. That is, the sensing result includes the second information. The sensing result further includes an identifier of the one or more objects in the sensing area. The second information is carried in the sensing result, so that signaling overheads can be reduced.

In an optional implementation, after receiving the second information from the SF network element, the service requester further determines, based on the second information, a terminal device cooperating with the service requester and/or a terminal device not cooperating with the service requester in the sensing area, thereby helping the service requester further track, monitor, and/or counteract the terminal device not cooperating with the service requester. The cooperative terminal device may be understood as a terminal device authorized by the service requester or a terminal device registered with the service requester; and the non-cooperative terminal device may be understood as a terminal device not authorized by the service requester or a terminal device not registered with the service requester.

For example, the identifier list includes an identifier of a UE 1, the second information indicates that the UE 1 is not associated with an object in the one or more objects, and there is no UE of another operator in the sensing area. In this case, the service requester determines that the UE 1 is a non-cooperative UE, and the service requester may further track or counteract the UE 1, or determine whether the UE 1 is not associated with an object according to an expected relationship.

For another example, the identifier list includes identifiers of a UE 1, a UE 2, and a UE 3, the second information indicates that the UE 1 and the UE 2 are associated with an object and the UE 3 is not associated with an object, and there is no UE of another operator in the sensing area. In this case, the service requester determines that the UE 1 and the UE 2 are terminal devices cooperating with the service requester and the UE 3 is a terminal device not cooperating with the service requester, and the service requester may further track or counteract the UE 3, or determine whether the UE 3 is not associated with an object according to an expected relationship.

It can be learned that in this embodiment of this application, the service requester sends the first information to the SF network element, where the first information includes the identifier list and the sensing area, and the identifier list includes the identifier of the one or more terminal devices. The SF network element receives the sensing data for the sensing area from the sensing device, where the sensing data includes the location information of the one or more objects. The SF network element determines the association relationship between the one or more terminal devices and the one or more objects based on the location information of the one or more terminal devices and the location information of the one or more objects, and indicates, to the service requester by using the second information, the association relationship between the one or more terminal devices and the one or more objects. This manner helps the service requester determine, based on the association relationship between the one or more terminal devices and the one or more objects, the terminal device cooperating with the service requester and/or the terminal device not cooperating with the service requester in the one or more terminal devices, thereby helping the service requester track or counteract the non-cooperative terminal device, or helping the service requester determine whether a terminal device exists in the sensing area and whether a terminal device is not associated with an object according to the expected relationship.

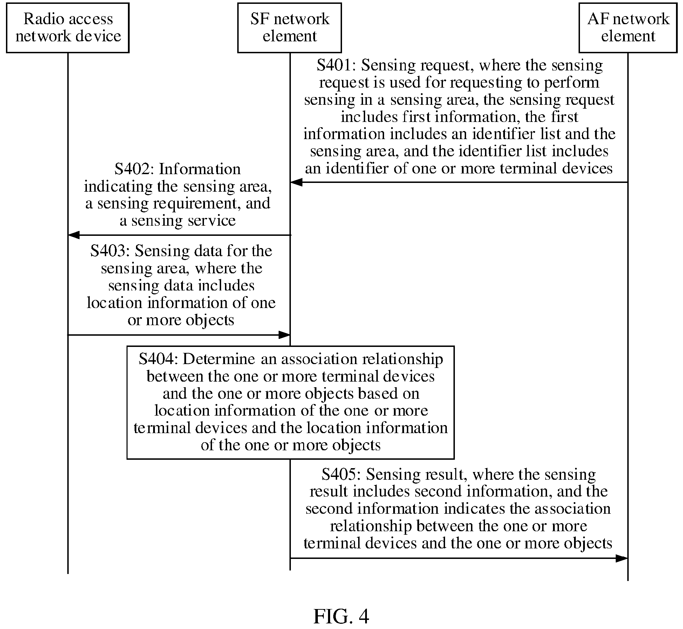

An embodiment of this application describes the foregoing communication method 100 by using an example in which the service requester is an AF network element, the sensing device is a radio access network device, the first information is carried in the sensing request, and the second information is carried in the sensing result. FIG. 4 is a diagram of interaction between a radio access network device, an SF network element, and an AF network element. The interaction between the radio access network device, the SF network element, and the AF network element includes but is not limited to S401 to S405.

S401: The AF network element sends a sensing request to the SF network element, where the sensing request is used for requesting to perform sensing in a sensing area, the sensing request includes first information, the first information includes an identifier list and the sensing area, and the identifier list includes an identifier of one or more terminal devices. Correspondingly, the SF network element receives the sensing request from the AF network element.

In an optional implementation, that the AF network element sends the sensing request to the SF network element includes: The AF network element sends the sensing request to the SF network element via a NEF network element. That the AF network element sends the sensing request to the SF network element via the NEF network element may be understood as: The AF network element sends the sensing request to the NEF network element, and then the NEF network element transparently transmits the sensing request to the SF network element; or may be understood as: The AF network element sends the sensing request to the NEF network element, and the NEF network element parses the sensing request, and sends an information element obtained through parsing to the SF network element. Optionally, the AF network element may send the sensing request to the SF network element via another network element other than the NEF network element, or the AF network element may directly send the sensing request to the SF network element.

In an optional implementation, before the AF network element sends the sensing request to the SF network element, the AF network element obtains the one or more terminal devices managed, in the sensing area, by an operator to which the SF network element belongs, to determine that the identifier list sent to the SF network element includes the identifier of the one or more terminal devices.

In an optional implementation, the SF network element further sends an association operation indication to the SF network element, where the association operation indication indicates the SF network element to determine an association relationship between the one or more terminal devices and one or more objects in sensing data obtained by the SF network element. Optionally, the association operation indication is carried in the sensing request, so that signaling overheads can be reduced. In addition, for an implementation of the association operation indication, refer to the descriptions of S301. Details are not described again.

S402: The SF network element sends, to the radio access network device, information indicating the sensing area, a sensing requirement, and a sensing service. Correspondingly, the access network device receives, from the SF network element, the information indicating the sensing area, the sensing requirement, and the sensing service.

Optionally, the sensing request sent by the AF network element to the SF network element further includes information indicating the sensing requirement and information indicating the sensing service. The information indicating the sensing requirement is, for example, information indicating a quality of service (quality of service, QoS) requirement of the sensing service, and the information indicating the sensing service is, for example, information indicating an identifier of the sensing service.

After receiving the sensing request from the AF network element, the SF network element determines, based on the sensing requirement, the sensing service, and the like indicated by the sensing request, a sensing device that executes the sensing service, for example, determines a radio access network device to execute the sensing service. Further, the SF network element sends, to the determined radio access network device, the information indicating the sensing area, the sensing requirement, and the sensing service, so that the radio access network device executes the sensing service on the sensing area based on the sensing requirement.

S403: The radio access network device sends the sensing data for the sensing area to the SF network element, where the sensing data includes location information of the one or more objects. Correspondingly, the SF network element receives the sensing data for the sensing area from the radio access network device.

It may be understood that the radio access network device executes the sensing service on the sensing area based on the sensing requirement, to obtain the sensing data, and sends the sensing data to the SF. The sensing data includes the location information of the one or more objects. For the location information of the one or more objects, refer to the descriptions of S302. Details are not described again.

S404: The SF network element determines the association relationship between the one or more terminal devices and the one or more objects based on location information of the one or more terminal devices and the location information of the one or more objects.

In an optional implementation, before determining the association relationship between the one or more terminal devices and the one or more objects based on the location information of the one or more terminal devices and the location information of the one or more objects, the SF network element obtains the location information of the one or more terminal devices. For an implementation in which the SF network element obtains the location information of the one or more terminal devices, refer to the descriptions of S303. Details are not described again.

Optionally, when the location information of the one or more terminal devices is from the AF network element, the location information of the one or more terminal devices is carried in the sensing request, or the location information of the one or more terminal devices is carried in another information element different from the sensing request.

In an optional implementation, if the SF network element obtains the location information of the one or more terminal devices from the AF network element, the SF network element may further obtain, from the AF network element, a first timestamp associated with the location information of the one or more terminal devices. The first timestamp associated with the location information of the one or more terminal devices may be carried in the sensing request, or may be carried in another information element different from the sensing request. For the first timestamp associated with the location information of the one or more terminal devices, refer to the descriptions of S303. Details are not described again.

If the SF network element obtains the first timestamp associated with the location information of the one or more terminal devices, that the SF network element determines the association relationship between the one or more terminal devices and the one or more objects based on the location information of the one or more terminal devices and the location information of the one or more objects includes: determining the association relationship between the one or more terminal devices and the one or more objects based on the location information of the one or more terminal devices and location information of the one or more objects at a moment indicated by the first timestamp or within a time range indicated by the first timestamp. In this manner, accuracy of the association relationship between the one or more terminal devices and the one or more objects can be improved.

In another optional implementation, if the SF network element does not obtain, from the AF network element, the first timestamp associated with the location information of the one or more terminal devices, the SF network element may further obtain, from the AF network element, a second timestamp associated with the identifier list, where the second timestamp indicates a moment at which the one or more terminal devices exist in the sensing area. The second timestamp associated with the identifier list may be carried in the sensing request, or may be carried in another information element different from the sensing request.

Optionally, when the SF network element does not obtain, from the AF network element, the second timestamp associated with the identifier list, the SF network element may use time at which the identifier list is received as the second timestamp associated with the identifier list.

If the SF network element obtains or determines the second timestamp associated with the identifier list, that the SF network element determines the association relationship between the one or more terminal devices and the one or more objects based on the location information of the one or more terminal devices and the location information of the one or more objects includes: determining the association relationship between the one or more terminal devices and the one or more objects based on the location information of the one or more terminal devices and location information of the one or more objects at the moment indicated by the second timestamp or within a time range indicated by the second timestamp. In this manner, the accuracy of the association relationship between the one or more terminal devices and the one or more objects can also be improved.

In addition, for a case in which the SF network element determines the association relationship between the one or more terminal devices and the one or more objects based on the location information of the one or more terminal devices and the location information of the one or more objects, refer to Implementation 1 and Implementation 2. Details are not described again.

S405: The SF network element sends a sensing result to the AF network element, where the sensing result includes second information, and the second information indicates the association relationship between the one or more terminal devices and the one or more objects. Correspondingly, the AF network element receives the sensing result from the SF network element.

In an optional implementation, the SF network element sends the sensing result to the AF network element includes: The SF network element sends the sensing result to the AF network element via the NEF network element. That the SF network element sends the sensing result to the AF network element via the NEF network element may be understood as: The SF network element sends the sensing result to the NEF network element, and the NEF network element transparently transmits the sensing result to the AF network element; or may be understood as: The SF network element sends the sensing result to the NEF network element, and the NEF network element parses the sensing result, and sends an information element obtained through parsing to the AF network element. Optionally, the SF network element may send the sensing result to the AF network element via another network element other than the NEF network element, or the SF network element may directly send the sensing result to the AF network element.

In addition, for a specific manner of the second information, refer to Manner a and Manner b in S304. Details are not described again.

Optionally, the AF network element further determines, based on the second information, a terminal device cooperating with the AF network element and/or a terminal device not cooperating with the AF network element. For a specific implementation, refer to the descriptions of S304. Details are not described again.

Optionally, the SF network element may further obtain a sensing request update from the AF network element, where the sensing request update includes an updated identifier of the one or more terminal devices. Therefore, the SF network element may determine an updated association relationship between the one or more terminal devices and the one or more objects based on updated location information of the one or more terminal devices and the location information of the one or more objects obtained by the sensing device by performing sensing in the sensing area.

It can be learned that the AF network element sends the sensing request to the SF network element, to request the SF network element to perform sensing in the sensing area, where the sensing request includes the identifier list and the sensing area, and the identifier list includes the identifier of the one or more terminal devices. The SF network element sends, to the radio access network device that performs sensing, the information indicating the sensing requirement, the sensing area, and the sensing service, so that the radio access network device executes the sensing service on the sensing area based on the sensing requirement, obtains the sensing data that includes the location information of the one or more objects, and sends the sensing data to the SF network element. The SF network element determines the association relationship between the one or more terminal devices and the one or more objects based on the location information of the one or more terminal devices and the location information of the one or more objects, and feeds back, to the AF network element by using the sensing result, the association relationship between the one or more terminal devices and the one or more objects. This manner helps the AF network element determine, based on the association relationship between the one or more terminal devices and the one or more objects, the terminal device cooperating with the AF network element and/or the terminal device cooperating with the AF network element, thereby helping the AF track or counteract the non-cooperative terminal device, or helping the AF determine whether a terminal device exists in the sensing area and whether a terminal device is not associated with an object according to an expected relationship.

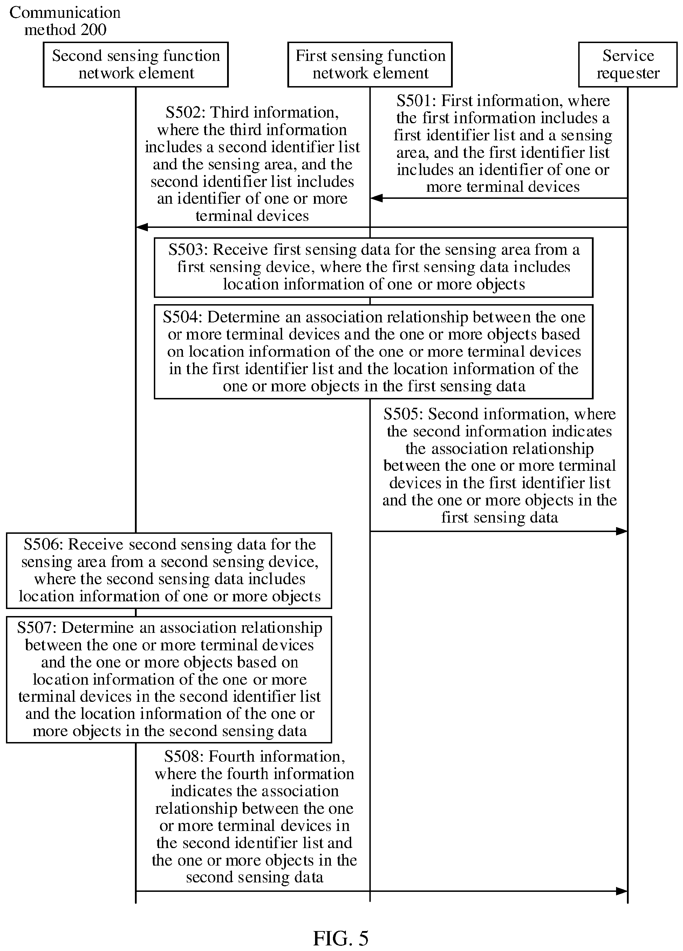

An embodiment of this application provides a communication method 200. FIG. 5 is a diagram of interaction of the communication method 200. The communication method 200 is described from a perspective of interaction between a first sensing function network element, a second sensing function network element, and a service requester. The communication method 200 includes but is not limited to the following steps.

S501: The service requester sends first information to the first sensing function network element, where the first information includes a first identifier list and a sensing area, and the first identifier list includes an identifier of one or more terminal devices. Correspondingly, the first sensing function network element receives the first information from the service requester.

It may be understood that for S501, refer to S301. Details are not described again.

S502: The service requester sends third information to the second sensing function network element, where the third information includes a second identifier list and the sensing area, and the second identifier list includes an identifier of one or more terminal devices. Correspondingly, the second sensing function network element receives the third information from the service requester.

The identifier of the one or more terminal devices included in the second identifier list is different from the identifier of the one or more terminal devices included in the first identifier list. In other words, the one or more terminal devices in the second identifier list are different from the one or more terminal devices in the first identifier list. In addition, an operator to which the second sensing function network element belongs is different from an operator to which the first sensing function network element belongs. The one or more terminal devices in the first identifier list are one or more terminal devices managed, in the sensing area, by the operator to which the first sensing function network element belongs, and the one or more terminal devices in the second identifier list are one or more terminal devices managed, in the sensing area, by the operator to which the second sensing function network element belongs.

In an optional implementation, before performing S501 and S502, the service requester determines an operator to which each of a plurality of terminal devices in the sensing area belongs, and then determines, based on a terminal device managed by each operator in the sensing area, an identifier list to be sent to a sensing function network element corresponding to the operator.

For example, a sensing area a includes a terminal device 1, a terminal device 2, and a terminal device 3, the terminal device 1 and the terminal device 2 belong to an operator 1, the terminal device 3 belongs to an operator 2, and an SF network element corresponding to the operator 1 and an SF network element corresponding to the operator 2 are respectively an SF network element #a and an SF network element #b. Therefore, the service requester determines that the first identifier list to be sent to the SF network element #a includes an identifier of the terminal device 1 and an identifier of the terminal device 2, and the second identifier list to be sent to the SF network element #b includes an identifier of the terminal device 3.

Optionally, the third information is used for triggering the second sensing function network element to determine an association relationship between the one or more terminal devices and one or more objects based on location information of the one or more terminal devices in the second identifier list and location information of the one or more objects in sensing data obtained by the second sensing function network element. In this manner, the second SF network element may determine the association relationship between the one or more terminal devices and the one or more objects based on the location information of the one or more terminal devices in the second identifier list and the location information of the one or more objects in the sensing data obtained by the second SF network element.

Optionally, the third information is carried in a sensing request sent by the service requester to the second sensing function network element, so that signaling overheads can be reduced.

Optionally, the service requester further sends an association operation indication to the second sensing function network element, where the association operation indication indicates to determine the association relationship between the one or more terminal devices in the second identifier list and the one or more objects in the sensing data obtained by the second sensing function network element. Correspondingly, the second sensing function network element obtains the association operation indication from the service requester. In this manner, after receiving the first information, the second sensing function network element may determine, based on the association operation indication, the association relationship between the one or more terminal devices in the second identifier list and the one or more objects in the sensing data obtained by the second SF network element. For an implementation of the association operation indication, refer to the descriptions of S301. Details are not described again.

A sequence of performing S501 and S502 is not limited in this embodiment of this application. S501 may be performed before S502, or may be performed after S502.

S503: The first sensing function network element receives first sensing data for the sensing area from a first sensing device, where the first sensing data includes the location information of the one or more objects.

S504: The first sensing function network element determines an association relationship between the one or more terminal devices and the one or more objects based on location information of the one or more terminal devices in the first identifier list and the location information of the one or more objects in the first sensing data.

S505: The first sensing function network element sends second information to the service requester, where the second information indicates the association relationship between the one or more terminal devices in the first identifier list and the one or more objects in the first sensing data. Correspondingly, the service requester receives the second information from the first sensing function network element.

It may be understood that for S503 and S504, refer to S302 to S304. Details are not described again.

S506: The second sensing function network element receives second sensing data for the sensing area from a second sensing device, where the second sensing data includes the location information of the one or more objects.

The second sensing device is a sensing device that is determined by the second sensing function network element to perform sensing in the sensing area. The second sensing device may be a radio access network device, a terminal device, or the like. For a form of the location information of the one or more objects in the second sensing data, refer to the form of the location information of the one or more objects in S302. Details are not described again.

In addition, for another implementation of the second sensing function network element, refer to the implementation of the SF network element in S302. Details are not described again. For example, before obtaining the sensing data for the sensing area from the second sensing device, the second sensing function network element sends a sensing request to the second sensing device, to request to obtain the sensing data for the sensing area from the second sensing device.

S507: The second sensing function network element determines the association relationship between the one or more terminal devices and the one or more objects based on the location information of the one or more terminal devices in the second identifier list and the location information of the one or more objects in the second sensing data.

It may be understood that for an implementation in which the second sensing function network element determines the association relationship between the one or more terminal devices and the one or more objects based on the location information of the one or more terminal devices in the second identifier list and the location information of the one or more objects in the second sensing data, refer to the implementation in which the SF network element determines the association relationship between the one or more terminal devices and the one or more objects based on the location information of the one or more terminal devices and the location information of the one or more objects in S303. Details are not described again.

In addition, for another implementation of the second sensing function network element, refer to the implementation of S303. Details are not described again. For example, before determining the association relationship between the one or more terminal devices and the one or more objects based on the location information of the one or more terminal devices in the second identifier list and the location information of the one or more objects in the second sensing data, the second sensing function network element obtains the location information of the one or more terminal devices based on a location service. For another example, before determining the association relationship between the one or more terminal devices and the one or more objects based on the location information of the one or more terminal devices in the second identifier list and the location information of the one or more objects in the second sensing data, the second sensing function network element obtains the location information of the one or more terminal devices from the service requester. For another example, the second sensing function network element further obtains a timestamp associated with the location information of the one or more terminal devices in the second identifier list. For another example, the second sensing function network element further obtains, from the service requester, a timestamp associated with the second identifier list.

S508: The second sensing function network element sends fourth information to the service requester, where the fourth information indicates the association relationship between the one or more terminal devices in the second identifier list and the one or more objects in the second sensing data. Correspondingly, the service requester receives the fourth information from the second sensing function network element.

When the second identifier list includes an identifier of one terminal device, the fourth information specifically indicates whether the one terminal device in the second identifier list is associated with an object in the one or more objects. When the second identifier list includes identifiers of a plurality of terminal devices, the fourth information specifically indicates an identifier of a terminal device associated with an object in the one or more objects and/or an identifier of a terminal device not associated with an object in the one or more objects in the plurality of terminal devices in a second identifier. For a specific form of the fourth information, refer to the specific form of the second information in S304. Details are not described again.

A sequence of performing S503 to S505 and S506 to S508 is not limited in this embodiment of this application. S503 to S505 may be performed before S506 to S508, or may be performed after S506 to S508.

In an optional implementation, the service requester further determines, based on the second information and the fourth information, a terminal device cooperating with the service requester and/or a terminal device not cooperating with the service requester. The service requester determines, based on the association relationship that is between the one or more terminal devices and the one or more objects and that is indicated by the second information and the association relationship that is between the one or more terminal devices and the one or more objects and that is indicated by the fourth information, the terminal device cooperating with the service requester and/or the terminal device not cooperating with the service requester. This manner helps the service requester track or counteract the non-cooperative terminal device.

For example, the second information indicates that a UE 1 and a UE 2 are associated with an object and a UE 3 is not associated with an object, and the fourth information indicates that the UE 1 and the UE 3 are associated with an object, and a UE 4 is not associated with an object. The service requester determines, based on the second information and the fourth information, that the UE 1, the UE 2, and the UE are cooperative terminal devices, and the UE is a non-cooperative terminal device.

For example, the second information indicates that a tag 1 is associated with a cargo, the second information indicates that a tag 2 and a tag 3 are associated with a cargo, and a tag 4 is not associated with an object. The service requester determines that the tag 1, the tag 2, and the tag 3 are cooperative terminal devices, the tag 4 is a non-cooperative terminal device, and the tag 4 may be a tag that is not bound to a cargo.

Optionally, if a terminal device managed by an operator different from the operator corresponding to the first SF network element and the operator corresponding to the second SF network element exists in the sensing area, the service requester may further indicate, to another SF network element, for example, a third SF network element and/or a fourth SF network element, one or more terminal devices managed by the operator corresponding to the SF network element in the sensing area. Therefore, all SF network elements that receive one or more terminal devices indicated by the service requester may perform related operations performed by the first SF network element or the second SF network element, for example, perform the operations in S503 to S505. Further, the service requester may determine, based on the second information, the fourth information, and an association relationship that is between a terminal device and an object and that is fed back by the another SF network element, a terminal device cooperating with the service requester and/or a terminal device not cooperating with the service requester.

It can be learned that in this embodiment of this application, the service requester indicates, to the first SF network element, the one or more terminal devices managed by the operator to which the first SF network element belongs, and indicates, to the second SF network element, the one or more terminal devices managed by the operator to which the second SF network element belongs. Therefore, the first SF network element determines the association relationship between the one or more terminal devices and the one or more objects based on the obtained location information of the one or more terminal devices and the obtained location information of the one or more objects in the first sensing data, and indicates the determined association relationship to the service requester by using the second information. The second SF network element determines the association relationship between the one or more terminal devices and the one or more objects based on the obtained location information of the one or more terminal devices and the obtained location information of the one or more objects in the second sensing data, and indicates the association relationship to the service requester by using the fourth information. Further, the service requester determines, based on the association relationship that is between the terminal device and the object and that is indicated by the first SF network element and the association relationship that is between the terminal device and the object and that is indicated by the second SF network element, the terminal device cooperating with the service requester and/or the terminal device not cooperating with the service requester. This manner helps the service requester track or counteract the non-cooperative terminal device, determine whether a terminal device exists in the sensing area, determine whether a terminal device is not associated with an object according to an expected relationship, and the like.

For the technical solution described above, the following further describes a corresponding apparatus implementation solution.

To implement the functions in the foregoing methods provided in embodiments of this application, the sensing function network element and the service requester may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

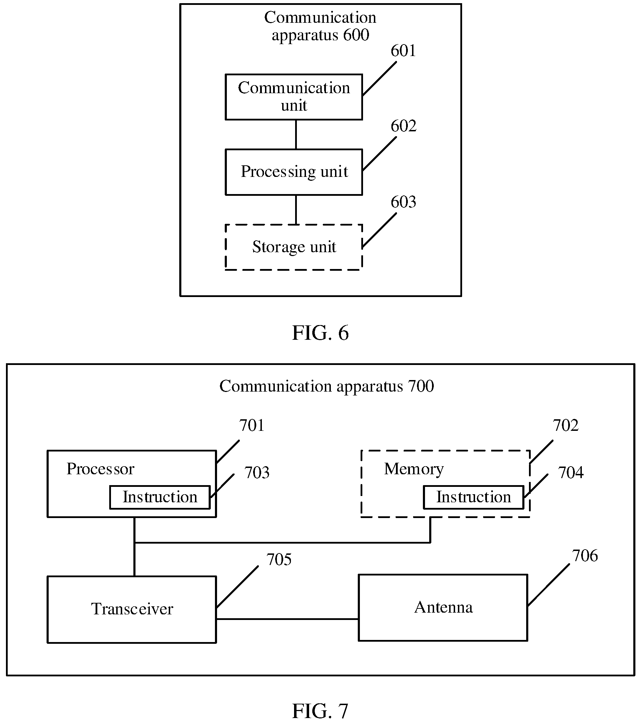

As shown in FIG. 6, an embodiment of this application provides a communication apparatus 600. The communication apparatus 600 may be a component (for example, an integrated circuit or a chip) of a sensing function network element, or may be a component (for example, an integrated circuit or a chip) of a service requester. Alternatively, the communication apparatus 600 may be another communication unit, configured to implement the method in method embodiments of this application. The communication apparatus 600 may include a communication unit 601 and a processing unit 602. Optionally, the communication apparatus 600 may further include a storage unit 603.

In a possible design, one or more units in FIG. 6 may be implemented by one or more processors, may be implemented by one or more processors and memories, may be implemented by one or more processors and transceivers, or may be implemented by one or more processors, memories, and transceivers. This is not limited in this embodiment of this application. The processor, the memory, and the transceiver may be disposed separately, or may be integrated.

The communication apparatus 600 has a function of implementing the sensing function network element described in embodiments of this application or a function of a service requester. For example, the communication apparatus 600 includes a corresponding module, unit, or means (means) used for a reader/writer to perform the steps related to the sensing function network element in the foregoing method embodiments. The functions, the units, or the means (means) may be implemented by software, or may be implemented by hardware executing corresponding software, or may be implemented by a combination of software and hardware. For details, further refer to the corresponding descriptions in the foregoing corresponding method embodiments.

In a possible design, the communication apparatus 600 may include a processing unit 602 and a communication unit 601, and the apparatus is used in a sensing function network element.

The communication unit 601 is configured to receive first information from a service requester, where the first information includes an identifier list and a sensing area, and the identifier list includes an identifier of one or more terminal devices.

The communication unit 601 is further configured to receive sensing data for the sensing area from a sensing device, where the sensing data includes location information of one or more objects.

The processing unit 602 is configured to determine an association relationship between the one or more terminal devices and the one or more objects based on location information of the one or more terminal devices and the location information of the one or more objects.

The communication unit 601 is further configured to send second information to the service requester, where the second information indicates the association relationship between the one or more terminal devices and the one or more objects.

In an optional implementation, the identifier list includes an identifier of one terminal device, and that the processing unit 602 determines the association relationship between the one or more terminal devices and the one or more objects based on the location information of the one or more terminal devices and the location information of the one or more objects includes: determining, based on location information of one terminal device and the location information of the one or more objects, whether the one terminal device is associated with an object in the one or more objects, where the second information specifically indicates whether the one terminal device is associated with an object in the one or more objects.

In another optional implementation, the identifier list includes identifiers of a plurality of terminal devices, and that the processing unit 602 determines the association relationship between the one or more terminal devices and the one or more objects based on the location information of the one or more terminal devices and the location information of the one or more objects includes: determining, based on location information of the plurality of terminal devices and the location information of the one or more objects, a terminal device associated with an object in the one or more objects and/or a terminal device not associated with an object in the one or more objects in the plurality of terminal devices, where the second information specifically indicates an identifier of the associated terminal device and/or an identifier of the non-associated terminal device in the plurality of terminal devices.

In an optional implementation, the second information includes an association indication and an identifier of a terminal device corresponding to the association indication, and/or a non-association indication and an identifier of a terminal device corresponding to the non-association indication.

In an optional implementation, before determining the association relationship between the one or more terminal devices and the one or more objects based on the location information of the one or more terminal devices and the location information of the one or more objects, the processing unit 602 further obtains the location information of the one or more terminal devices based on a location service.

In an optional implementation, before determining the association relationship between the one or more terminal devices and the one or more objects based on the location information of the one or more terminal devices and the location information of the one or more objects, the processing unit 602 further obtains the location information of the one or more terminal devices from the service requester.

In an optional implementation, the processing unit 602 is further configured to obtain, from the service requester, a first timestamp associated with the location information of the one or more terminal devices; and that the processing unit 602 determines the association relationship between the one or more terminal devices and the one or more objects based on the location information of the one or more terminal devices and the location information of the one or more objects includes: determining the association relationship between the one or more terminal devices and the one or more objects based on the location information of the one or more terminal devices and location information of the one or more objects at a moment indicated by the first timestamp or within a time range indicated by the first timestamp.

In an optional implementation, the location information of the one or more terminal devices is obtained by the service requester at the moment indicated by the first timestamp or within the time range indicated by the first timestamp.

In an optional implementation, the processing unit 602 is further configured to obtain, from the service requester, a second timestamp associated with the identifier list, where the second timestamp indicates a moment at which the one or more terminal devices exist in the sensing area; and that the processing unit 602 determines the association relationship between the one or more terminal devices and the one or more objects based on the location information of the one or more terminal devices and the location information of the one or more objects includes: determining the association relationship between the one or more terminal devices and the one or more objects based on the location information of the one or more terminal devices and location information of the one or more objects at the moment indicated by the second timestamp or within a time range indicated by the second timestamp.

In an optional implementation, the processing unit 602 is further configured to obtain an association operation indication from the service requester, where the association operation indication indicates to determine the association relationship between the one or more terminal devices and the one or more objects in the sensing data obtained by the sensing function network element.

In an optional implementation, the second information further indicates a moment corresponding to the association relationship between the one or more terminal devices and the one or more objects.

In an optional implementation, the second information further includes feature information of a terminal device associated with an object and/or feature information of a terminal device not associated with an object in the one or more terminal devices.

In an optional implementation, the second information further includes feature information of an object associated with the one or more terminal devices and/or feature information of an object associated with none of the one or more terminal devices in the one or more objects.

In an optional implementation, the feature information indicates at least one of the following: a contour, a type, a trajectory, an orientation, or a velocity.

In an optional implementation, that the processing unit 602 determines, based on the location information of the one terminal device and the location information of the one or more objects, whether the one terminal device is associated with the one or more objects includes: when the location information of the one terminal device is the same as one of the location information of the one or more objects, determining that the one terminal device is associated with an object in the one or more objects; and when the location information of the one terminal device is different from all of the location information of the one or more objects, determining that the one terminal device is not associated with an object in the one or more objects.

In an optional implementation, that the processing unit 602 determines, based on the location information of the plurality of terminal devices and the location information of the one or more objects, the terminal device associated with the object in the one or more objects and/or the terminal device not associated with the object in the one or more objects in the plurality of terminal devices includes: determining, as a terminal device associated with an object in the one or more objects, a terminal device corresponding to location information that is in the location information of the plurality of terminal devices and that is the same as the location information of the one or more objects; and/or determining, as a terminal device not associated with an object in the one or more objects, a terminal device corresponding to location information that is in the location information of the plurality of terminal devices and that is different from all of the location information of the one or more objects.

In an optional implementation, the first information is carried in a sensing request, and the sensing request is used for requesting the sensing function network element to perform sensing in the sensing area.

This embodiment of this application and the foregoing method embodiments are based on a same concept, and bring same technical effects. For a specific principle, refer to the descriptions in the foregoing embodiments. Details are not described again.

In another possible design, the communication apparatus 600 may include a processing unit 602 and a communication unit 601, where the apparatus is used for a service requester, and the processing unit 602 is configured to process a signal/signaling.

The communication unit 601 is configured to send first information to a first sensing function network element, where the first information includes a first identifier list and a sensing area, and the first identifier list includes an identifier of one or more terminal devices.

The communication unit 601 is further configured to receive second information from the first sensing function network element, where the second information indicates an association relationship between the one or more terminal devices and one or more objects in the sensing area.

In an optional implementation, the first information is used for triggering the first sensing function network element to determine the association relationship between the one or more terminal devices and the one or more objects based on location information of the one or more terminal devices and location information of the one or more objects in sensing data obtained by the first sensing function network element.

In an optional implementation, the first identifier list includes an identifier of one terminal device, and the second information specifically indicates whether the one terminal device is associated with an object in the one or more objects.

In an optional implementation, the first identifier list includes identifiers of a plurality of terminal devices, and the second information specifically indicates an identifier of a terminal device associated with an object in the one or more objects and/or an identifier of a terminal device not associated with an object in the one or more objects in the plurality of terminal devices.

In an optional implementation, the second information includes an association indication and an identifier of a terminal device corresponding to the association indication, and/or a non-association indication and an identifier of a terminal device corresponding to the non-association indication.

In an optional implementation, the processing unit 602 is configured to determine, based on the second information, a terminal device cooperating with the service requester and/or a terminal device not cooperating with the service requester in the sensing area.

In an optional implementation, the communication unit 601 is further configured to send the location information of the one or more terminal devices to the first sensing function network element.

In an optional implementation, before sending the location information of the one or more terminal devices to the first sensing function network element, the communication unit 601 is further configured to: obtain the location information of the one or more terminal devices based on a location service; or obtain location information from each of the one or more terminal devices.

In an optional implementation, the communication unit 601 is further configured to send a first timestamp associated with the location information of the one or more terminal devices to the first sensing function network element.

In an optional implementation, the location information of the one or more terminal devices is obtained by the service requester at a moment indicated by the first timestamp or within a time range indicated by the first timestamp.

In an optional implementation, the communication unit 601 is further configured to send a second timestamp associated with the first identifier list to the first sensing function network element, where the second timestamp indicates a moment at which the one or more terminal devices exist in the sensing area.

In an optional implementation, the communication unit 601 is further configured to send an association operation indication to the first sensing function network element, where the association operation indication indicates to determine the association relationship between the one or more terminal devices and the one or more objects in the sensing data obtained by the first sensing function network element.

In an optional implementation, the second information further indicates a moment corresponding to the association relationship between the one or more terminal devices and the one or more objects.

In an optional implementation, the second information further includes feature information of a terminal device associated with an object and/or feature information of a terminal device not associated with an object in the one or more terminal devices.

In an optional implementation, the second information further includes feature information of an object associated with the one or more terminal devices and/or feature information of an object associated with none of the one or more terminal devices in the one or more objects.

In an optional implementation, the feature information indicates at least one of the following: a contour, a type, a trajectory, an orientation, or a velocity.

In an optional implementation, the first information is carried in a sensing request, and the sensing request is used for requesting the first sensing function network element to perform sensing in the sensing area.

This embodiment of this application and the foregoing method embodiments are based on a same concept, and bring same technical effects. For a specific principle, refer to the descriptions in the foregoing embodiments. Details are not described again.

An embodiment of this application further provides a communication apparatus 700. FIG. 7 is a diagram of a structure of the communication apparatus 700. The communication apparatus 700 may be a sensing function network element, or may be a chip, a chip system, a processor, or the like that supports a sensing function network element in implementing the foregoing method; or may be a service requester, or may be a chip, a chip system, a processor, or the like that supports a service requester in implementing the foregoing method. The apparatus may be configured to implement the method described in the foregoing method embodiments. For details, refer to the descriptions in the foregoing method embodiments.

The communication apparatus 700 may include one or more processors 701. The processor 701 may be a general-purpose processor or a special-purpose processor or the like. For example, the processor may be a baseband processor, a digital signal processor, an application-specific integrated circuit, a field programmable gate array or another programmable logic device, a discrete gate or a transistor logic device, a discrete hardware component, or a central processing unit (central processing unit, CPU). The baseband processor may be configured to process a communication protocol and communication data. The central processing unit may be configured to control the communication apparatus (for example, a base station, a baseband chip, a terminal, a terminal chip, a distributed unit (distributed unit, DU), or a central unit (central unit, CU)), execute a software program, and process data of the software program.

Optionally, the communication apparatus 700 may include one or more memories 702. The one or more memories 702 may store instructions 704, and the instructions may be run on the processor 701, so that the communication apparatus 700 performs the method described in the foregoing method embodiments. Optionally, the memory 702 may also store data. The processor 701 and the memory 702 may be separately disposed, or may be integrated together.

Optionally, the communication apparatus 700 may further include a transceiver 705 and an antenna 706. The transceiver 705 may be referred to as a transceiver unit, a transceiver machine, a transceiver circuit, or the like, and is configured to implement a transceiver function. The transceiver 705 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function.

In a possible design, the communication apparatus 700 may be used in a sensing function network element. Specifically, the processor 701 is configured to perform S303 in the communication method 100, and is configured to perform S504 and S507 in the communication method 200. The transceiver 705 is configured to perform S301, S302, and S304 in the communication method 100, and is configured to perform S501, S502, S503, S505, S506, and S508 in the communication method 200.

In another possible design, the communication apparatus 700 may be used for a service requester. Specifically, the transceiver 705 is configured to perform S301 and S304 in the communication method 100, and is configured to perform S501, S502, S505, and S508 in the communication method 200.

Optionally, the processor 701 may store instructions 703, and the instructions 703 are run on the processor 701, so that the communication apparatus 700 may perform the method described in the foregoing method embodiment. The instructions 703 may be fixed in the processor 701, and in this case, the processor 701 may be implemented by using hardware.

This embodiment of this application and the method embodiments shown in the communication method 100 and the communication method 200 are based on a same concept, and bring same technical effects. For a specific principle, refer to the descriptions of embodiments shown in the communication method 100 and the communication method 200. Details are not described again.

An embodiment of this application further provides a communication system. The system may include a sensing function network element and a service requester. Optionally, the system further includes a sensing device. In another possible design, the system may further include another device/function network element that interacts with the sensing function network element, the service requester, and the sensing device.

An embodiment of this application further provides a computer-readable storage medium, configured to store computer software instructions. When the instructions are executed by a communication apparatus, a function in any one of the foregoing method embodiments is implemented.

An embodiment of this application further provides a computer program product, configured to store computer software instructions. When the instructions are executed by a communication apparatus, a function in any one of the foregoing method embodiments is implemented.

An embodiment of this application further provides a computer program. When the computer program is run on a computer, a function in any one of the foregoing method embodiments is implemented.

The terms "first", "second", and the like in the specification, claims, and accompanying drawings in embodiments of this application are used to distinguish between different objects, but are not used to describe a specific order. "First", "second", and the like are merely intended for a purpose of description, and shall not be understood as an indication or implication of relative importance or implicit indication of a quantity of indicated technical features. Therefore, a feature limited by "first", "second", or the like may explicitly or implicitly include one or more features. In the descriptions of embodiments, unless otherwise specified, the term "a plurality of" means two or more.

In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in embodiments of this application means that a particular feature, structure, or characteristic described with reference to an embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

In embodiments of this application, "at least one (item)" means one or more, "a plurality of" means two or more, and "and/or" is used to describe an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural.

n embodiments of this application, the word "example", "for example", or the like is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state disk, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applied to a sensing function network element, and the method comprises:
receiving first information from a service requester, wherein the first information comprises an identifier list and a sensing area, and the identifier list comprises an identifier of one or more terminal devices;
receiving sensing data for the sensing area from a sensing device, wherein the sensing data comprises location information of one or more objects;
determining an association relationship between the one or more terminal devices and the one or more objects based on location information of the one or more terminal devices and the location information of the one or more objects; and
sending second information to the service requester, wherein the second information indicates the association relationship between the one or more terminal devices and the one or more objects.

2. The method according to claim 1, wherein the identifier list comprises an identifier of one terminal device, and the determining the association relationship between the one or more terminal devices and the one or more objects based on the location information of the one or more terminal devices and the location information of the one or more objects comprises:
determining, based on location information of one terminal device in the one or more terminal devices and the location information of the one or more objects, whether the one terminal device is associated with an object in the one or more objects, wherein
the second information specifically indicates whether the one terminal device is associated with an object in the one or more objects.

3. The method according to claim 1, wherein the identifier list comprises identifiers of a plurality of terminal devices, and the determining the association relationship between the one or more terminal devices and the one or more objects based on the location information of the one or more terminal devices and the location information of the one or more objects comprises:
determining, based on location information of the plurality of terminal devices and the location information of the one or more objects, a terminal device associated with an object in the one or more objects and/or a terminal device not associated with an object in the one or more objects in the plurality of terminal devices, wherein
the second information specifically indicates an identifier of the associated terminal device and/or an identifier of the non-associated terminal device in the plurality of terminal devices.

4. The method according to claim 2 or 3, wherein the second information comprises an association indication and an identifier of a terminal device corresponding to the association indication, and/or a non-association indication and an identifier of a terminal device corresponding to the non-association indication.

5. The method according to any one of claims 1 to 4, wherein before the determining the association relationship between the one or more terminal devices and the one or more objects based on the location information of the one or more terminal devices and the location information of the one or more objects, the method further comprises:
obtaining the location information of the one or more terminal devices based on a location service.

6. The method according to any one of claims 1 to 4, wherein before the determining the association relationship between the one or more terminal devices and the one or more objects based on the location information of the one or more terminal devices and the location information of the one or more objects, the method further comprises:
obtaining the location information of the one or more terminal devices from the service requester.

7. The method according to claim 6, wherein the method further comprises:
obtaining, from the service requester, a first timestamp associated with the location information of the one or more terminal devices; and
the determining the association relationship between the one or more terminal devices and the one or more objects based on the location information of the one or more terminal devices and the location information of the one or more objects comprises:
determining the association relationship between the one or more terminal devices and the one or more objects based on the location information of the one or more terminal devices and location information of the one or more objects at a moment indicated by the first timestamp or within a time range indicated by the first timestamp.

8. The method according to claim 7, wherein the location information of the one or more terminal devices is obtained by the service requester at the moment indicated by the first timestamp or within the time range indicated by the first timestamp.

9. The method according to any one of claims 1 to 6, wherein the method further comprises:
obtaining, from the service requester, a second timestamp associated with the identifier list, wherein the second timestamp indicates a moment at which the one or more terminal devices exist in the sensing area; and
the determining the association relationship between the one or more terminal devices and the one or more objects based on the location information of the one or more terminal devices and the location information of the one or more objects comprises:
determining the association relationship between the one or more terminal devices and the one or more objects based on the location information of the one or more terminal devices and location information of the one or more objects at the moment indicated by the second timestamp or within a time range indicated by the second timestamp.

10. The method according to any one of claims 1 to 9, wherein the method further comprises:
obtaining an association operation indication from the service requester, wherein the association operation indication indicates to determine the association relationship between the one or more terminal devices and the one or more objects in the sensing data obtained by the sensing function network element.

11. The method according to any one of claims 1 to 10, wherein the second information further indicates a moment corresponding to the association relationship between the one or more terminal devices and the one or more objects.

12. The method according to any one of claims 1 to 11, wherein the second information further comprises feature information of a terminal device associated with an object and/or feature information of a terminal device not associated with an object in the one or more terminal devices.

13. The method according to any one of claims 1 to 12, wherein
the second information further comprises feature information of an object associated with the one or more terminal devices and/or feature information of an object associated with none of the one or more terminal devices in the one or more objects.

14. The method according to claim 12 or 13, wherein the feature information indicates at least one of the following: a contour, a type, a trajectory, an orientation, or a velocity.

15. The method according to claim 2, wherein the determining, based on the location information of the one terminal device and the location information of the one or more objects, whether the one terminal device is associated with the one or more objects comprises:
when the location information of the one terminal device is the same as one of the location information of the one or more objects, determining that the one terminal device is associated with an object in the one or more objects; and
when the location information of the one terminal device is different from all of the location information of the one or more objects, determining that the one terminal device is not associated with an object in the one or more objects.

16. The method according to claim 3, wherein the determining, based on the location information of the plurality of terminal devices and the location information of the one or more objects, the terminal device associated with the object in the one or more objects and/or the terminal device not associated with the object in the one or more objects in the plurality of terminal devices comprises:
determining, as a terminal device associated with an object in the one or more objects, a terminal device corresponding to location information that is in the location information of the plurality of terminal devices and that is the same as the location information of the one or more objects; and/or
determining, as a terminal device not associated with an object in the one or more objects, a terminal device corresponding to location information that is in the location information of the plurality of terminal devices and that is different from all of the location information of the one or more objects.

17. The method according to any one of claims 1 to 16, wherein the first information is carried in a sensing request, and the sensing request is used for requesting the sensing function network element to perform sensing in the sensing area.

18. A communication method, wherein the method is applied to a service requester, and the method comprises:
sending first information to a first sensing function network element, wherein the first information comprises a first identifier list and a sensing area, and the first identifier list comprises an identifier of one or more terminal devices; and
receiving second information from the first sensing function network element, wherein the second information indicates an association relationship between the one or more terminal devices and one or more objects in the sensing area.

19. The method according to claim 18, wherein the first information is used for triggering the first sensing function network element to determine the association relationship between the one or more terminal devices and the one or more objects based on location information of the one or more terminal devices and location information of the one or more objects in sensing data obtained by the first sensing function network element.

20. The method according to claim 19, wherein the first identifier list comprises an identifier of one terminal device, and the second information specifically indicates whether the one terminal device is associated with an object in the one or more objects.

21. The method according to claim 19, wherein the first identifier list comprises identifiers of a plurality of terminal devices, and the second information specifically indicates an identifier of a terminal device associated with an object in the one or more objects and/or an identifier of a terminal device not associated with an object in the one or more objects in the plurality of terminal devices.

22. The method according to claim 20 or 21, wherein
the second information comprises an association indication and an identifier of a terminal device corresponding to the association indication, and/or a non-association indication and an identifier of a terminal device corresponding to the non-association indication.

23. The method according to any one of claims 18 to 21, wherein the method further comprises:
determining, based on the second information, a terminal device cooperating with the service requester and/or a terminal device not cooperating with the service requester in the sensing area.

24. The method according to any one of claims 18 to 23, wherein the method further comprises:
sending the location information of the one or more terminal devices to the first sensing function network element.

25. The method according to claim 24, wherein before the sending the location information of the one or more terminal devices to the first sensing function network element, the method further comprises:
obtaining the location information of the one or more terminal devices based on a location service; or
obtaining location information from each of the one or more terminal devices.

26. The method according to claim 24 or 25, wherein the method further comprises:
sending a first timestamp associated with the location information of the one or more terminal devices to the first sensing function network element.

27. The method according to claim 26, wherein the location information of the one or more terminal devices is obtained by the service requester at a moment indicated by the first timestamp or within a time range indicated by the first timestamp.

28. The method according to any one of claims 18 to 25, wherein the method further comprises:
sending a second timestamp associated with the first identifier list to the first sensing function network element, wherein the second timestamp indicates a moment at which the one or more terminal devices exist in the sensing area.

29. The method according to any one of claims 18 to 28, wherein the method further comprises:
sending an association operation indication to the first sensing function network element, wherein the association operation indication indicates to determine the association relationship between the one or more terminal devices and the one or more objects in the sensing data obtained by the first sensing function network element.

30. The method according to any one of claims 18 to 29, wherein the second information further indicates a moment corresponding to the association relationship between the one or more terminal devices and the one or more objects.

31. The method according to any one of claims 18 to 30, wherein the second information further comprises feature information of a terminal device associated with an object and/or feature information of a terminal device not associated with an object in the one or more terminal devices.

32. The method according to any one of claims 18 to 31, wherein the second information further comprises feature information of an object associated with the one or more terminal devices and/or feature information of an object associated with none of the one or more terminal devices in the one or more objects.

33. The method according to claim 31 or 32, wherein
the feature information indicates at least one of the following: a contour, a type, a trajectory, an orientation, or a velocity.

34. The method according to any one of claims 18 to 33, wherein the first information is carried in a sensing request, and the sensing request is used for requesting the first sensing function network element to perform sensing in the sensing area.

35. A communication apparatus, wherein the communication apparatus comprises a module configured to perform the method according to any one of claims 1 to 17, or comprises a module configured to perform the method according to any one of claims 18 to 34.

36. A communication apparatus, wherein the communication apparatus comprises a processor, and the processor is configured to perform the method according to any one of claims 1 to 17, or is configured to perform the method according to any one of claims 18 to 34.

37. A communication system, comprising an apparatus configured to perform the method according to any one of claims 1 to 17 and an apparatus configured to perform the method according to any one of claims 18 to 34.

38. A computer-readable storage medium, wherein the computer-readable storage medium is configured to store instructions, and when the instructions are run on a computer, the method according to any one of claims 1 to 17 is performed, or the method according to any one of claims 18 to 34 is performed.

39. A computer program product comprising instructions, wherein when the computer program product runs on a computer, the method according to any one of claims 1 to 17 is performed, or the method according to any one of claims 18 to 34 is performed.
